# EUROPÄISCHE PATENTSCHRIFT

(11) **EP 4 150 278 B1**
(45) Veröffentlichungstag und Bekanntmachung des Hinweises auf die Patenterteilung: **03.09.2025**
(21) Anmeldenummer: 21728818.2
(22) Anmeldetag: 07.05.2021
(51) Int. Cl.: F26B 15/12, F26B 25/10, F26B 25/12, E04B 2/00, F27D 1/00, F27B 9/32

(54) **BEHANDLUNGSMODUL FÜR EINEN BEHANDLUNGSTUNNEL, BEHANDLUNGSTUNNEL UND FERTIGUNGSANLAGE FÜR EIN BEHANDLUNGSMODUL**
REATMENT MODULE FOR A TREATMENT TUNNEL, TREATMENT TUNNEL AND PRODUCTION LINE FOR A TREATMENT MODULE
MODULE DE TRAITEMENT POUR UN TUNNEL DE TRAITEMENT, TUNNEL DE TRAITEMENT ET USINE DE FABRICATION D'UN MODULE DE TRAITEMENT

(30) Priorität: 11.05.2020 DE 102020112670
(43) Veröffentlichungstag der Anmeldung: 22.03.2023
(73) Patentinhaber: Dürr Systems AG, 74321 Bietigheim-Bissingen (DE)
(72) Erfinder: HERRERA DE LA TORRE, Jose Joaquin, 74357 Bonnigheim (DE); PEINDL, Volker, 75210 Keltern (DE); NÄPFEL, Peter, 71732 Tamm-Hohenstange (DE); MÜNSTERMANN, Wilfried, 48629 Metelen (DE)
(74) Vertreter: RPK Patentanwälte Reinhardt und Kaufmann Partnerschaft mbB
(86) Internationale Anmeldenummer: PCT/DE2021/100419
(87) Internationale Veröffentlichungsnummer: WO 2021/228324

(56) Entgegenhaltungen:
- EP-A1- 0 534 267
- EP-A1- 0 957 324
- EP-A1- 2 781 866
- EP-A2- 0 867 674
- EP-A2- 1 892 346
- CN-A- 103 743 233
- CN-A- 109 883 192
- DE-A1- 102009 045 808
- DE-B- 1 124 219
- FR-A- 1 105 713
- FR-A1- 2 578 038
- JP-A- H04 104 930
- JP-A- S5 325 956
- JP-U- H0 622 892
- JP-U- S5 287 700
- JP-U- S5 787 295
- US-A- 4 731 016
- US-A- 4 764 108
- US-A1- 2004 209 217

## Beschreibung

### Technisches Gebiet

Die Erfindung betrifft ein Behandlungsmodul für einen Behandlungstunnel, der einen oder mehrere aufeinander folgende Behandlungsmodule aufweist, sowie einen Behandlungstunnel, der einen oder mehrere aufeinander folgende Behandlungsmodule aufweist und eine Fertigungsanlage für ein Behandlungsmodul.

### Stand der Technik

Trockner in Lackieranlagen für Fahrzeuge (PKWs, Vans, LKWs, Busse) arbeiten üblicherweise mit Aushärtetemperaturen zwischen 100° und 220 °C. Daher werden diese Trockner mit einer entkoppelten Außenwandung mit möglichst wenig Wärmebrücken hergestellt. Der Trocknerinnenraum ist ein dichtgeschweißter Tunnel, in dem sich die Fahrzeugkarosserien befinden, der sich bei höheren Temperaturen in einen Bereich mit Kompensatoren in Längsrichtung ausdehnen kann. Dabei ist der Trockner üblicherweise als Tunnel ausgebildet, durch den die Fahrzeugkarosserien bewegt werden, der eine Länge von beispielsweise bis zu 100 m aufweisen kann. Die Außenverkleidung ist auf verschiebbaren Profilen aufgeschraubt. Dadurch kann die Wärmeausdehnung des Innenraums frei und ohne Einflüsse auf die kalte Außenhülle erfolgen.

Aus Wirtschaftlichkeits- und Flexibilitätsgründen werden heute vermehrt sogenannte Paneel-Trockner verwendet. Diese Trockner sind mit durchgängigen Paneelen aufgebaut, welche eine durchgängige Verbindung von Innenwandung zu Außenwandung aufweisen und daher nicht für derartige Temperatur- und Ausdehnungsunterschiede vorgesehen sind.

Die Paneele werden üblicherweise aneinandergeschweißt, um die nötige Dichtigkeit zu gewährleisten. Es werden dafür große, flache Blechelemente eingesetzt, mit dem Ziel, das aufwändige Dichtschweißen im Innenraum des Trockners weitestgehend zu reduzieren.

Die US 2004/209217 A1, US 4731016 A, EP 0867674 A2 offenbaren Ofenbaugruppen, die aus thermisch isolierten Blechelementen zusammengesetzt sind.

### Offenbarung der Erfindung

Eine Aufgabe der Erfindung ist es, ein Behandlungsmodul für Trockner in Lackieranlagen zu schaffen, das wirtschaftlich herzustellen und flexibel einsetzbar ist.

Eine weitere Aufgabe der Erfindung ist es, einen Behandlungstunnel, der einen oder mehrere Behandlungsmodule aufweist, zu schaffen, welche wirtschaftlich herzustellen und flexibel einsetzbar sind.

Eine weitere Aufgabe der Erfindung ist es, eine Fertigungsanlage für solche Behandlungsmodule anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Es wird nach einem Aspekt der Erfindung ein Behandlungsmodul für einen Behandlungstunnel vorgeschlagen, der einen oder mehrere in einer Längsrichtung aufeinander folgende Behandlungsmodule aufweist, mit wenigstens einem Innengehäuse, das wenigstens ein Flächenelement aufweist in Form einer Bodenwandung und/oder einer Seitenwandung und/oder einer Deckenwandung, und/oder einer Innenwandung, wobei das wenigstens eine Flächenelement eine Längserstreckung in der Längsrichtung und eine Quererstreckung quer zur Längsrichtung aufweist.

Das wenigstens eine Flächenelement ist aus vorgefertigten Kassetten, insbesondere Blechkassetten, gebildet, welche Querseiten mit einer Kassettenbreite in Längsrichtung und Längsseiten mit einer Kassettenlänge quer zur Längsrichtung aufweisen, die zu dem wenigstens einen Flächenelement vormontiert und miteinander dicht verschweißt sind. Das Flächenelement ist zumindest in Längsrichtung in ein Rastermaß unterteilt, das mit zumindest einer Kassettenbreite der Kassetten in Längsrichtung korrespondiert. Dabei sind die Kassetten innerhalb des Flächenelements wenigstens bereichsweise mit ihren Längsseiten quer zur Längserstreckung und mit ihren Querseiten parallel zur Längserstreckung des Flächenelements angeordnet, und/oder die Kassetten sind innerhalb des Flächenelements wenigstens bereichsweise mit ihren Querseiten quer zur Längserstreckung und mit ihren Längsseiten parallel zur Längserstreckung des Flächenelements angeordnet, wobei fertige, aus den Kassetten verschweißte Flächenelemente zu einem Behandlungsmodul zusammengefügt sind.

Insbesondere können Wandungen in Form von Bodenwandung oder Deckenwandung ausschließlich aus längsgeteilten Kassetten bestehen oder aus einer Mischung aus längsgeteilten und quergeteilten Kassetten. Längsgeteilte Kassetten sind mit ihren Längsseiten quer, insbesondere senkrecht zur Längserstreckung und mit ihren schmaleren Querseiten parallel zur Längserstreckung angeordnet. Quergeteilte Kassetten sind mit ihren Querseiten quer, insbesondere zur Längserstreckung und mit ihren Längsseiten parallel zur Längserstreckung angeordnet. Die quergeteilten Kassetten können dann auch unabhängig eines Rastermaßes angeordnet werden.

Vorteilhaft kann das Rastermaß so gewählt sein, dass eine Quererstreckung eines Flächenelements einer Kassettenlänge oder einem Vielfachen oder einem Bruchteil davon entspricht und dass eine Längserstreckung eines Flächenelements einem Vielfachen einer Kassettenbreite oder einem Bruchteil davon entspricht. So kann ein Flächenelement zweckmäßigerweise aus einzelnen Kassetten, welche beispielsweise nebeneinander und/oder übereinander angeordnet sind, gebildet sein. Die Kassetten können günstigerweise längs oder quer zur Längserstreckung des Behandlungsmoduls angeordnet sein. Die Kassetten in einem Flächenelement sind vorteilhaft so zu einem angrenzenden Flächenelement angeordnet, dass die Kanten der Kassetten fluchten, wenn die Flächenelemente miteinander verbunden sind. Die Kassetten in einem Flächenelement können günstigerweise eine gleiche Kassettenbreite aufweisen.

Es können auch Kassetten mit unterschiedlicher Kassettenbreite, beispielsweise einer halben Kassettenbreite, darin angeordnet sein. Günstigerweise kann an ein Flächenelement, das beispielsweise als Seitenwandung ausgebildet ist und das eine oder mehrere Kassetten mit derartigen anderen Kassettenbreiten aufweist, einer Bodenwandung und/oder eine Deckenwandung angrenzen, welche jeweils beispielsweise an gleicher Position im jeweiligen Flächenelement eine oder mehrere Kassetten mit derartigen anderen Kassettenbreiten aufweisen. Soll andererseits beispielsweise wegen einer Tür in einem Flächenelement die Rasterung aufgebrochen werden und mit kleineren Kassettenbreiten gearbeitet werden, dann kann diese Breite verschieden zu der Kassettenbreite an der Deckenwandung oder der Bodenwandung sein.

Die Bodenwandung oder Deckenwandung kann aus Kassetten so gebildet sein, dass mehrere Kassetten an ihren Langseiten zu einem Verbund zusammengefügt sind. Solche Kassetten können an den Schmalseiten der Kassetten zusammengefügt sein und die entsprechende Bodenwandung oder Deckenwandung bilden.

Alternativ können mehrere Kassetten an ihren Langseiten zu einem Verbund zusammengefügt sein. An den Schmalseiten der Kassetten an einer Seite des Verbunds können eine, zwei oder mehr Kassetten mit ihren Langseiten quer zu den Kassetten des Verbunds anliegen und mit ihren Schmalseiten aneinanderstoßen. Damit braucht lediglich ein Verbund hergestellt zu werden, an den zwei Kassetten quer zu den Kassetten des Verbunds montiert werden. Dies reduziert die Fertigungszeit von Bodenwandung und Deckenwandung. Deckenwandung und Bodenwandung können bei einem Behandlungsmodul so montiert werden, dass die beiden Kassetten an dem Verbund von Kassetten auf gegenüberliegenden Seiten des Behandlungsmoduls angeordnet sind.

Erfindungsgemäß ergibt sich eine modulare Konstruktion eines Behandlungsmoduls, insbesondere für einen Trockner einer Lackieranlage, welche auf derartigen vorgefertigten Kassetten aufbaut. Die Kassetten, vorzugsweise aus Blech, werden zu Seitenwandungen, Innenwandungen, Bodenwandungen und Deckenwandungen vormontiert und dicht verschweißt. Aus den so gefertigten Flächenelementen in Form von Bodenwandungen, Seitenwandungen, Innenwandungen und Deckenwandungen werden dann die Trocknermodule zusammengebaut.

Das Behandlungsmodul kann auch als Kühlmodul ausgebildet sein, insbesondere als Kühlmodul, das an einen Trockner einer Lackieranlage anschließt. Ferner kann das Behandlungsmodul als Durchlauftrockner, insbesondere mit einem unsteten Förderer zum Fördern des zu trocknenden Bauteils, ausgebildet sein.

Jede Kassette weist eine gleichartige Grundstruktur für die jeweilige Bodenwandung, Seitenwandung, Innenwandung oder Deckenwandung auf.

Die Kassetten sind in ihren Dimensionen wie Höhe und Breite frei parametrisierbar, und können verwindungssteif und passgenau ausgeführt werden. Eine Kassettenbreite der Kassetten kann beispielsweise bis zu 1000 mm, eine Kassettenlänge bis zu 3800 mm, und eine Dicke bis zu 80 mm betragen. Die Materialstärke des für die Kassetten verwendeten Blechs kann beispielsweise 1,5 mm betragen. Alternativ sind auch andere Blechstärken wie beispielsweise 1,0 mm, 2,0 mm, 2,5 mm, oder 3,0 mm möglich.

Die Kassetten können zweckmäßigerweise als Bodenwandungskassetten, Seitenwandungskassetten, Deckenwandungskassetten oder Innenwandungskassetten ausgebildet sein, je nach Verwendung in einer Bodenwandung, einer Seitenwandung, Innenwandung bzw. einer Deckenwandung. Auch Außenverkleidungselemente des Behandlungsmoduls können optional durch Kassetten gebildet werden. Alternativ können übliche Profilbleche, beispielsweise Trapezbleche, Wellbleche oder dergleichen, als Außenverkleidungselemente eingesetzt werden. Optional können bereichsweise Kassetten und bereichsweise Profilbleche als Außenverkleidungselemente vorliegen. Profilbleche kann vorteilhaft als preiswertes Außenverkleidungselement, insbesondere für eine Deckenwandung und/oder eine Seitenwandung, eingesetzt werden.

Die Modularisierung der Einzelteile des Behandlungsmoduls erlaubt eine Automatisierung für die sequenzgerechte und Just-in-time-Herstellung der Kassetten. Damit ist auch eine Fließfertigung für den Zusammenbau der Elemente und des finalen Trockners möglich.

Die Kassetten sind auch ohne zusätzlichen Fügeprozess in sich stabil und verwindungssteif. Geprägte Versteifungen wie Rillen oder Flächen können zu zusätzlicher Steifigkeit führen. Dadurch können Versteifungsrippen reduziert werden oder komplett entfallen, da die Versteifungen bereits direkt in die Kassette integriert sind. Geräusche beim Gehen von Personal im Behandlungsmodul können so reduziert werden. Die Prägungen sind auch zur Positionierung der zu montierenden Flächenelemente zueinander vorteilhaft.

Mit dem erfindungsgemäßen Aufbau des Behandlungsmoduls ist eine Reduzierung der eingesetzten Materialien sowie eine Verbesserung der Logistik möglich. Der Transport der Kassetten kann auf Rollen-, Kugel- oder Bürstentischen direkt zu den Montageplätzen erfolgen. Es ist kein Handhabungsgerät wie Kran, Manipulator o. ä. notwendig. Dadurch kann das Unfallrisiko bei der Handhabung gegenüber labilen Großteilen reduziert werden.

Eine Ausrichtung der Kassetten bei der Fertigung kann vorteilhaft an einem festen Anschlag und unter den Kassetten zueinander beispielsweise mittels Positionierelementen wie Bohrungen, Erhebungen, Vertiefungen oder Aussparungen in seitlichen abgewinkelten Laschen erfolgen.

Benachbarte Kassetten in Flächenelementen können beispielsweise mittels wenigstens einem der Fügeverfahren Nieten, Schrauben, Clinchen, Schweißen, insbesondere Widerstandsschweißen oder dergleichen, verbunden sein.

Weniger Schweißverzug kann beispielsweise durch Schweißen im Bereich der Kassettenflansche, wo mehr Material zur Verfügung steht und durch zusätzliche Prägungen erreicht werden, wodurch ein Wärmefluss durch die Wandung des Innengehäuses nach außen reduziert oder sogar unterbrochen werden kann.

Ein vollverschweißter Aufbau des Behandlungsmoduls hat auch den Vorteil, luftdicht zu sein, wodurch im Betrieb des Behandlungsmoduls eine Anreicherung von Lösungsmittel im Isoliermaterial zwischen Innengehäuse und Außengehäuse vermieden werden kann.

Dadurch lässt sich eine effizientere Montage des Behandlungsmoduls zum luftdichten Verbinden der vorgefertigten Kassetten realisieren. Eine Automatisierung des Dichtschweißens der aus den einzelnen Kassetten bestehenden Bodenwandungen, Seitenwandungen und Deckenwandungen sowie der Innenwandungen ist vorteilhaft möglich. Das Dichtschweißen bei der Verbindung benachbarter Kassetten und/oder Flächenelemente kann zweckmäßigerweise auf der glatten Seite der Kassette beispielsweise mit Schutzgasschweißen oder Löten oder dergleichen erfolgen.

Auch Nietverbindungen können vorteilhaft beim Fügen benachbarter Kassetten eingesetzt werden. Die Verwendung von hochausreissfesten Standardnieten in den Positionierlöchern der Kassetten zur einfachen und positionsgenauen Montage ist zweckmäßig. Dadurch können Schweißprozesse entfallen, wodurch der Fügeprozess einfacher beherrschbar wird.

Auch ist es möglich, so eine luftdichte Verbindung zwischen den einzelnen Kassetten zu schaffen, damit keine lösungsmittelhaltige Luft in das Isoliermaterial zwischen Innengehäuse und Außengehäuse gelangen und sich da zu einer eventuell gefährlichen Brandlast anreichern kann. Nietverbindungen sind vibrationsbeständig und können speziell für den Anwendungsfall mit Temperaturen bis mind. 220°C ausgelegt sein.

Alternativ oder zusätzlich kann jede Kassette gemäß einer vorteilhaften Ausgestaltung des Behandlungsmoduls eine oder mehrere Standardschnittstellen für eine Verbindung mit einer benachbarten Kassette zumindest im gleichen und/oder benachbarten Flächenelement aufweisen.

Jede Kassette kann dabei eine oder mehrere Standardschnittstellen für eine Verbindung mit einer benachbarten Kassette im gleichen Flächenelement, oder mit einer benachbarten Kassette in einem von dem Flächenelement, das die Kassette aufweist, abstehenden, insbesondere quer abstehenden, angrenzenden Flächenelement aufweisen.

Die Standardschnittstellen auf der jeweils gleichen Seite von Kassetten eines gleichen Flächenelements entsprechen einander und sind jeweils gleich ausgebildet. Die Standardschnittstellen auf verschiedenen, aber beim Aneinanderfügen von Kassetten miteinander zu verbindenden Seiten der Kassetten sind jeweils komplementär ausgebildet, sodass sie beispielsweise ineinandergreifen und jeweils auf einfache Weise verbunden werden können. Optional können auch Verbindungselemente wie beispielsweise Nieten eingesetzt werden, um die Kassetten zu verbinden, oder die Kassetten können alternativ oder zusätzlich entlang einer Fügenaht auch verschweißt werden.

Mit Vorteil können die Schnittstellen beim Verbinden der Kassetten leicht zugänglich sein, insbesondere von einer Seite der zusammengefügten Kassetten, ohne dass großflächige Seitenteile gewendet oder umgedreht werden müssen.

Standardschnittstellen von Kassetten, welche in verschiedenen Flächenelementen angeordnet sind, sind jeweils so ausgebildet, dass aneinander zu fügende Standardschnittstellen verschiedener Kassetten jeweils komplementär ausgebildet sind.

Auf diese Weise sind die Kassetten im gleichen Flächenelement sowie in verschiedenen, jedoch aneinander zu fügenden Flächenelementen geeignet, wie bei einem Puzzle-Spiel verwechslungssicher nach dem Poka-Yoke-Prinzip verbunden zu werden.

Gemäß einer vorteilhaften Ausgestaltung des Behandlungsmoduls kann eine Standardschnittstelle für eine Verbindung einer Kassette zu einer benachbarten Kassette im gleichen oder in einem benachbarten Flächenelement wenigstens ein Rahmenelement mit wenigstens einem Positionierelement aufweisen. Insbesondere kann dabei das wenigstens eine Rahmenelement als abstehende Lasche, insbesondere als abgewinkelte Lasche ausgebildet sein, die von einer Hauptfläche der Kassette abgewinkelt ist. Vorteilhaft kann das Rahmenelement auch als Umkantung ausgebildet sein. Das Rahmenelement kann dabei günstigerweise zweifach umgekantet sein. Positionierelemente können beispielsweise als Bohrungen, Erhebungen, Vertiefungen oder Aussparungen ausgebildet sein. Aneinanderzufügende Positionierelemente benachbarter Kassetten können vorteilhaft zueinander komplementär ausgebildet sein, sodass sie beim Verbinden benachbarter Kassetten ineinandergreifen können und so eine sichere und reproduzierbare Positionierung der Kassetten ermöglichen.

Schnelleres und einfacheres Positionieren und Ausrichten der Kassetten zueinander kann auch mittels Anschlägen realisiert werden. Es ist dadurch kein zusätzliches Vermessen notwendig. So können beispielsweise Montagefehler durch den Einsatz von Positionierlöchern bzw. Positionierrillen in den Kassetten reduziert werden. Da in dem erfindungsgemäßen Aufbau des Behandlungsmoduls im Bereich der abstehenden Laschen, insbesondere abgewinkelten Laschen, insbesondere Umkantungen der Kassetten geschweißt wird, ist die Wärmeabfuhr durch zusätzliches Material verbessert und es kommt zu weniger Wärmeverzug in den Bauteilen.

Gemäß einer vorteilhaften Ausgestaltung des Behandlungsmoduls kann eine Standardschnittstelle für eine Verbindung einer Kassette zu einer benachbarten Kassette in verschiedenen aneinander angrenzenden Flächenelementen wenigstens ein Rahmenelement mit wenigstens einem Positionierelement und/oder wenigstens einer Prägung, insbesondere wenigstens einer Prägung in einer Hauptfläche der Kassette aufweisen. Die Prägung kann beispielsweise als Erhebung oder Vertiefung in der Hauptfläche ausgebildet sein.

Insbesondere kann dabei die wenigstens eine Prägung zum Positionieren von wenigstens einer Innenwandung des Innengehäuses vorgesehen sein. Eine Bodenwandung kann beispielsweise als Standardschnittstelle für eine Innenwandung eine Prägung in einer Hauptfläche der Kassette zum Positionieren der Innenwandung aufweisen. Optional kann die Innenwandung, bzw. das zu verbindende Flächenelement eine dazu komplementäre Prägung aufweisen. Damit ist eine einfachere Montage der Innenelemente des Behandlungsmoduls realisierbar.

Innenwandungen können ebenfalls aus vorgefertigten Kassetten gebildet sein. Vorteilhaft können diese Innenwandungen dann mit einem entsprechenden Rastermaß der Bodenwandungen, der Seitenwandungen und der Deckenwandungen korrespondieren. Auch können die Innenwandungen auf diese Weise besonders wirtschaftlich dargestellt werden.

Gemäß einer vorteilhaften Ausgestaltung des Behandlungsmoduls kann eine Standardschnittstelle zwischen einer Seitenwandung und einer Bodenwandung eine Auflageleiste aufweisen, die insbesondere zur Abstützung der Seitenwandung ausgebildet ist.

Damit ist eine einfache und reproduzierbare Positionierung der Seitenwandung beim Aufbau des Behandlungsmoduls ermöglicht.

Gemäß einer vorteilhaften Ausgestaltung des Behandlungsmoduls kann eine Standardschnittstelle zwischen einer Seitenwandung und einer Bodenwandung eine Anpressleiste aufweisen. Die Seitenwandung kann so günstig mit einer Kante der Bodenwandung verschweißt werden.

Da in dem erfindungsgemäßen Aufbau des Behandlungsmoduls im Bereich von abstehenden, insbesondere abgewinkelten Laschen oder Umkantungen der Kassetten geschweißt wird, ist die Wärmeabfuhr durch zusätzliches Material verbessert und es kommt zu weniger Wärmeverzug in den Bauteilen.

Gemäß einer vorteilhaften Ausgestaltung des Behandlungsmoduls können die Standardschnittstellen zur Verbindung von Kassetten und/oder Flächenelementen verwechslungssicher nach dem Poka-Yoke-Prinzip ausgebildet sein. Einfacheres und verwechslungssicheres Positionieren nach dem Poka-Yoke-Prinzip durch unterschiedliche Profilierungen der Kassetten und/oder Flächenelemente kann die Montage von Bodenwandungen, Seitenwandungen und Deckenwandungen sowie gegebenenfalls von Innenwandungen zu komplette Modulen begünstigen. So kann vorteilhaft ein fehlerhafter Zusammenbau eines Behandlungsmoduls vermieden werden.

Schnelleres und einfacheres Positionieren und Ausrichten der Kassetten zueinander kann mittels Anschlägen realisiert werden. Es ist dadurch kein zusätzliches Vermessen notwendig. So können beispielsweise Montagefehler durch den Einsatz von Positionierlöchern bzw. Positionierrillen in den Kassetten reduziert werden.

Gemäß einer vorteilhaften Ausgestaltung des Behandlungsmoduls können die vorgefertigten Kassetten in ihrer Hauptfläche eingeprägte Versteifungsstrukturen aufweisen. Erhaben oder vertieft geprägte Versteifungen wie Rillen oder Flächen können zu zusätzlicher Steifigkeit führen. Dadurch können Versteifungsrippen reduziert werden oder komplett entfallen.

Gemäß einer vorteilhaften Ausgestaltung des Behandlungsmoduls können geschlossene und/oder verriegelte Eckverbindungen zur Verbindung und/oder Versteifung von abgewinkelten Rahmenelementen der Kassetten vorgesehen sein. Damit können die Kassetten und die daraus aufgebauten Flächenelemente auch ohne zusätzliche Fügeprozesse in sich stabil und verwindungssteif ausgebildet sein. Es ergibt sich vorteilhaft eine höhere Stabilität durch die Kassettenbauweise auf Grund der Materialdopplung mit jeweils geschlossenen Ecken. Die Eckverbindungen können vorteilhaft eine mechanische Verriegelung der Kassetten bieten.

Gemäß einer vorteilhaften Ausgestaltung des Behandlungsmoduls können die Flächenelemente mittels ineinandergreifenden Profilierungen der Kassetten zueinander positioniert sein. Geeignete Verprägungen in den Kassetten können das verwechslungssichere Positionieren der aneinanderstoßenden Bauteile erleichtern.

Gemäß einer vorteilhaften Ausgestaltung des Behandlungsmoduls kann das Innengehäuse von einem thermisch entkoppelten Außengehäuse umgeben sein. Insbesondere kann das Innengehäuse bei thermisch bedingter Längenänderung entlang der Längsrichtung unabhängig beweglich sein. Dadurch wirken sich eine thermische Ausdehnung des Innengehäuses und mögliche Längsverschiebungen des Innengehäuses nicht auf das Außengehäuse aus. Die mechanische Stabilität des Behandlungsmoduls kann so wirksam erhöht werden.

Gemäß einer vorteilhaften Ausgestaltung des Behandlungsmoduls können am Innengehäuse thermisch entkoppelte Halterungen, insbesondere Aufhängeschienen für Außenverkleidungselemente angeordnet sein. Perforierte und thermisch mit Isoliermaterial zur thermischen Isolierung wie beispielsweise Glasfasermaterial entkoppelte Aufhängeschienen für die Außenverkleidung ermöglichen die thermische Entkopplung des Außengehäuses des Behandlungsmoduls auf vorteilhafte Weise. Die Aufhängeschienen können gleitend gelagert sein, sodass sich die Innenwandung des Behandlungsmoduls ausdehnen kann, ohne die Aufhängeschienen und damit die Außenwandung zu verschieben. Diese Maßnahmen führen vorteilhaft zu weniger Wärmetransfer und weniger Wärmeverlusten. Optional kann zusätzlich auch eine weitere Lage Isolierung zwischen den Aufhängeschienen angeordnet sein.

Das Isoliermaterial kann direkt in die Kassetten der Außenverkleidungselemente eingelegt sein. Diese werden dann direkt auf die Kassetten des Innengehäuses mit thermischer Entkopplung aufgeschraubt. Ein Wärmeverzug kann bei dieser Ausgestaltung mit Langlöchern in den Kassetten der Außenverkleidungselemente kompensiert werden.

Gemäß einer vorteilhaften Ausgestaltung des Behandlungsmoduls kann das Außengehäuse zumindest bereichsweise ein oder mehrere Außenverkleidungselemente in Form von Profilblechen aufweisen. Dies erlaubt ein kostengünstiges Außengehäuse. Das oder die Profilbleche können leicht an gewünschte Außenmaße angepasst werden.

Gemäß einer vorteilhaften Ausgestaltung des Behandlungsmoduls können als thermische Isolierung von Außenverkleidungselementen in Form von Profilblechen Halter eingesetzt werden, die thermisch, beispielsweise mittels Glasfaser oder dergleichen, von dem Innengehäuse entkoppelt sind. Das oder die Profilbleche können an C-Trägern angeordnet sein, welche auf dem Halter befestigt sind.

Gemäß einer vorteilhaften Ausgestaltung des Behandlungsmoduls kann eine Innenwandung zur Aufnahme von einem oder mehreren Filterrahmen vorgesehen sein. Insbesondere können dabei Filtereinsätze mittels Klammern in den Filterrahmen fixiert oder fixierbar sein. Auf diese Weise ist es möglich, vorteilhaft einen Universal-Filterrahmen einzusetzen. Ein Gegenrahmen am Filtereinsatz kann günstigerweise dadurch entfallen. Ein solch integrierter Befestigungsmechanismus ohne Gegenrahmen für Filtereinsätze kann vorteilhaft ermöglichen, verschiedene Filtergrößen einzusetzen.

Der Universal-Filterrahmen mit Prägungen kann beispielsweise kleine Filtereinsätze aufnehmen, die von einer Innenseite der Filterwand mit Klammern geklemmt werden, während große Filtereinsätze von einer Außenseite her mit Klammern geklemmt werden können.

Alternativ oder zusätzlich können auch Filterboxen anstelle einer Filterwand mit Filtereinsätzen eingesetzt werden. Vorteilhaft kann eine Filterbox sich über die komplette Kassettenbreite und Kassettenhöhe erstrecken. Dies erlaubt eine bessere Zugänglichkeit zu den Kassetten innerhalb des Behandlungsmoduls.

Gemäß einer vorteilhaften Ausgestaltung des Behandlungsmoduls kann eine Innenwandung zur Aufnahme von einer oder mehreren Düsen vorgesehen sein. Insbesondere kann dabei eine Schnittstelle zwischen einer Innenwandung und einer Düse eine Nut/Federhalterung aufweisen. Auf diese Weise ist es vorteilhaft möglich, einen nötigen Wechsel der Düsen schneller und ohne Werkzeug durchzuführen. So ist eine werkzeugfreie Düseninstallation durch Kassetten mit integrierten Haltern und Verriegelung möglich. Die Düsen können einfach in eine Nut/Federhalterung eingeschoben werden und werden automatisch verriegelt.

Gemäß einer vorteilhaften Ausgestaltung des Behandlungsmoduls kann wenigstens ein thermisch entkoppeltes Türsegment in einem seitlichen Flächenelement vorgesehen sein, wobei wenigstens ein Türscharnier des Türsegments eine einstellbare Federkraft aufweist.

Die zusätzliche thermische Entkoppelung des Türsegments kann vorteilhaft realisiert werden durch einen geteilten Türrahmen mit einer zusätzlichen Dichtlippe beispielsweise aus Glasfasermaterial, ein zweiteiliges thermisch entkoppeltes Türblatt, eine doppelte Dichtung am Türblatt sowie ein Türscharnier mit einstellbarem Federmechanismus. Durch die Dichtungslippe aus Glasfasermaterial kann der Zwischenraum zwischen Türrahmen und Türblatt vorteilhaft geteilt werden. Auf diese Weise kann eine Reduzierung der Wärmeverluste und Wärmebrücken an Türsegment und Aufhängung der Außenverkleidung erreicht werden.

Eine verbesserte Dichtheit der Tür ergibt sich durch eine zusätzliche Feder an den Türbeschlägen. Damit kann der Anpressdruck gezielt eingestellt werden, sodass die Tür auf dem gesamten Umfang dicht schließt. Weniger Verschleiß der Türdichtung tritt auf, da zwei Dichtungen am Türblatt montiert sind.

Gemäß einer vorteilhaften Ausgestaltung des Behandlungsmoduls kann eine integrierte Andockgeometrie, insbesondere ein in ein seitliches Flächenelement integrierter Schweißrahmen zur Montage von Behandlungsmodul an Behandlungsmodul vorgesehen sein.

Es kann zur Montage ein Losfuß als Anlagenfuß des Behandlungsmoduls eingesetzt sein. Dabei wird zuerst ein Führungselement auf dem Boden des Aufstellortes montiert, über welchem der Anlagenfuß angeordnet wird.

Der Anlagenfuß umgreift dieses Führungselement an zwei Seiten. So kann sich der Anlagenfuß bei einer temperaturbedingten Längenausdehnung des Behandlungsmoduls entlang dieses Führungselements einfach verschieben.

Die im Behandlungsmodul integrierte Andockgeometrie erleichtert die Montage von Behandlungsmodul an Behandlungsmodul, insbesondere bei einem Aufbau vor Ort in einer Fertigungsstätte. Vorteilhaft weist das Behandlungsmodul stabilere Kanten an Verbindungsstößen auf. Auch können zusätzliche Abdeckungen im Bereich von Verbindungsstellen bei der Verbindung von Behandlungsmodul zu Behandlungsmodul entfallen. Dadurch kann beispielsweise ein zusätzlicher Schweißrahmen zur Verbindung zweier aneinander angrenzender Behandlungsmodule entfallen.

Nach einem weiteren Aspekt der Erfindung wird ein Behandlungstunnel vorgeschlagen, der einen oder mehrere aufeinander folgende erfindungsgemäße Behandlungsmodule aufweist, wobei eine integrierte Andockgeometrie, insbesondere ein in ein Flächenelement integrierter Schweißrahmen zur Montage von Behandlungsmodul an Behandlungsmodul vorgesehen ist.

Durch den integrierten Schweißrahmen kann beispielsweise ein zusätzlicher Schweißrahmen für eine Montage verschiedener Behandlungsmodule in einer aufeinander folgenden Anordnung entfallen. Auf diese Weise ist möglich, einen Behandlungstunnel aus aneinandergereihten Behandlungsmodulen günstiger zu realisieren. Somit können verschiedene Fertigungsschritte, beispielsweise in einer Lackieranlage von Kraftfahrzeugenkarosserien, auf geeignete Weise verbunden werden. Der modulare Aufbau erleichtert ein Aufstellen des Behandlungstunnels in einer Produktionsanlage beim Kunden vor Ort.

Gemäß einer vorteilhaften Ausgestaltung des Behandlungstunnels kann ein thermischer Kompensator für eine flexible Verbindung Behandlungsmodul mit Behandlungsmodul vorgesehen sein. Der Kompensator zum Ausgleich thermisch bedingter Änderungen mechanischer Dimensionen kann im Behandlungsmodul vormontiert und von der Innenseite des Behandlungsmoduls beispielsweise verschraubt werden. Dies ist auf Grund der guten Zugänglichkeit im Behandlungsmodul möglich.

Dadurch können Behandlungsmodule auf einfachere Weise aneinandergefügt werden. Auch eine eventuell nötige Wartung des Kompensators kann auf diese Weise einfacher erfolgen. Weiter kann bei einer solchen Anordnung des Kompensators eine Querschnittsreduzierung in Kanälen des Behandlungsmoduls vermieden werden, wodurch im Behandlungsmodul auch weniger Druckverlust von eingeblasener Luft auftritt.

Gemäß einer vorteilhaften Ausgestaltung des Behandlungstunnels kann eine Teleskopverbindung zur Verbindung wenigstens zweier Außenverkleidungselemente vorgesehen sein. Mittels der Teleskopverbindung kann eine einfachere Montage von Außenverkleidungselementen erreicht werden. Dadurch ist eine Vorfertigung von Außenverkleidungsteilen und eine bessere Austauschbarkeit von beschädigten Verkleidungsteilen möglich. Damit kann kostenintensive Arbeit von der Installation beim Kunden vor Ort in die Fertigung des Behandlungsmoduls, bzw. Behandlungstunnels verlagert werden.

Nach einem weiteren Aspekt der Erfindung wird eine Fertigungsanlage für ein erfindungsgemäßes Behandlungsmodul vorgeschlagen, umfassend wenigstens eine erste Linie zur Fertigung vorgefertigter Kassetten, insbesondere Blechkassetten, insbesondere von Bodenwandungskassetten, Seitenwandungskassetten, Deckenwandungskassetten, und Innenwandungskassetten, eine zweite Linie zum Verbinden der vorgefertigten Kassetten zu Flächenelementen, insbesondere zu Bodenwandungen, Seitenwandungen, Deckenwandungen, und Innenwandungen, sowie eine dritte Linie zum Verbinden der Flächenelemente zu einem Behandlungsmodul.

Vorteilhaft können in der erfindungsgemäßen Fertigungslinie auf der ersten Linie Kassetten, insbesondere Blechkassetten, vollautomatisch hergestellt werden. Dies wird besonders begünstigt, da die Kassetten eine gleichartige Grundstruktur für jeweils Bodenwandung, Seitenwandung, Deckenwandung und gegebenenfalls Innenwandung sowie entsprechende Standardschnittstellen aufweisen.

Auf der zweiten Linie kann zweckmäßigerweise eine Fließfertigung zur Fertigung von ganzen Bodenwandungen, Seitenwandungen, Deckenwandungen und Innenwandungen stattfinden, während auf der dritten Linie dann eine Fließfertigung zur Herstellung von versandbereiten Behandlungsmodulen erfolgen kann.

Gemäß einer vorteilhaften Ausgestaltung der Fertigungsanlage können in der ersten Linie insbesondere Fertigungsschritte mittels Trennen und Biegen implementiert sein, und/oder in der zweiten Linie insbesondere Fertigungsschritte mittels Fügen, Aufbringen von Verkleidung und/oder Isolierung implementiert sein, und/oder in der dritten Linie insbesondere Fertigungsschritte mittels Fügen von Flächenelementen, Isolieren und Verkleiden von Eckverbindungen implementiert sein. Trennen kann dabei Verfahren wie z.B. Stanzen, Schneiden, Abscheren, Laserbehandlung umfassen.

Auf der ersten Linie können günstigerweise die üblichen Blechbearbeitungsschritte wie Stanzen, Schneiden, Abscheren, Biegen, Umformen zur Herstellung der Kassetten aus Blech erfolgen. Auf der zweiten Linie können die vorgefertigten Kassetten dann zu den Flächenelementen in Form von Bodenwandung, Seitenwandung, Deckenwandung und Innenwandung gefügt werden.

Verkleidungselemente und/oder Isolierungselemente können angebracht werden, während auf der dritten Linie dann die fertigen Flächenelemente zu ganzen Behandlungsmodulen zusammengefügt werden.

Transport und Montage der Kassetten kann in der Fließfertigung auf Transportbahnen, wie z.B. Rollentischen, Kugeltischen, Bürstentischen, erfolgen, sodass kein Kran notwendig ist, um die Teile zu bewegen. Die Prozesse sind leicht automatisierbar. Eine einfache Montage der Kassetten ist möglich durch das Vorhandensein von Positionierlöchern, bzw. Anschlägen, d.h. es ist kein Messen der Bauteile nötig.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Behandlungsmodul nach einem Ausführungsbeispiel der Erfindung;
- Fig. 2: ein weiteres Behandlungsmodul nach einem Ausführungsbeispiel der Erfindung mit Profilblechen;
- Fig. 3: Details einer thermisch isolierten Halterung für ein Profilblech als Außenverkleidungselement nach einem Ausführungsbeispiel der Erfindung;
- Fig. 4: eine Kassette einer Seitenwandung des Behandlungsmoduls nach Figur 1;
- Fig. 5: eine Eckverbindung der Kassette nach Figur 4;
- Fig. 6: eine Auflageleiste einer Kassette einer Bodenwandung nach einem Ausführungsbeispiel der Erfindung;
- Fig. 7: eine Auflageleiste mit einer Anpressleiste einer Kassette einer Bodenwandung nach einem Ausführungsbeispiel der Erfindung;
- Fig. 8: ein Montagefuß für das Behandlungsmodul nach einem Ausführungsbeispiel der Erfindung;
- Fig. 9: eine Kassette einer Bodenwandung nach einem Ausführungsbeispiel der Erfindung;
- Fig. 10: ein Flächenelement aus vorgefertigten Kassetten nach einem Ausführungsbeispiel der Erfindung;
- Fig. 11: ein teilweise gefügtes Behandlungsmodul nach einem Ausführungsbeispiel der Erfindung;
- Fig. 12: eine Außenhülle eines Innengehäuses eines Behandlungsmoduls nach einem Ausführungsbeispiel der Erfindung ohne Innenwandungen;
- Fig. 13: einen Querschnitt durch eine Kassette mit Außenverkleidung und Isolierung nach einem Ausführungsbeispiel der Erfindung;
- Fig. 14: ein Flächenelement mit Aufhängeschienen für Außenverkleidungselemente nach einem Ausführungsbeispiel der Erfindung;
- Fig. 15: einen Schnitt durch eine Kassette mit Außenverkleidung und Isolierung nach einem weiteren Ausführungsbeispiel der Erfindung;
- Fig. 16: eine Draufsicht auf den Schnitt nach Figur 15;
- Fig. 17: eine Innenwandung mit Filtereinsätzen nach einem Ausführungsbeispiel der Erfindung;
- Fig. 18: Filtereinsätze nach Figur 17 in vergrößerter Darstellung;
- Fig. 19: Details der Befestigung eines Filtereinsatzes nach Figur 17;
- Fig. 20: Details der Befestigung eines weiteren Filtereinsatzes nach Figur 17;
- Fig. 21: eine Innenwandung mit Filterboxen nach einem weiteren Ausführungsbeispiel der Erfindung;
- Fig. 22: eine Innenwandung mit Düsenauslässen nach einem Ausführungsbeispiel der Erfindung;
- Fig. 23: eine in einer Innenwandung nach Figur 22montierte Düse nach einem Ausführungsbeispiel der Erfindung;
- Fig. 24: eine Draufsicht auf einen Querschnitt durch ein Türsegment nach einem Ausführungsbeispiel der Erfindung;
- Fig. 25: eine Draufsicht auf einen Schnitt durch ein Türsegment nach einem weiteren Ausführungsbeispiel der Erfindung;
- Fig. 26: eine perspektivische Ansicht des Schnitts durch das Türsegment nach einem Ausführungsbeispiel der Erfindung;
- Fig.27: Details einer fixen Verbindung zweier Behandlungsmodule mit einem integrierten Schweißrahmen nach einem Ausführungsbeispiel der Erfindung;
- Fig. 28: Details einer flexiblen Verbindung zweier Behandlungsmodule nach einem Ausführungsbeispiel der Erfindung;
- Fig. 29: einen Behandlungstunnel nach einem Ausführungsbeispiel der Erfindung;
- Fig. 30: eine Bodenwandung oder Deckenwandung nach einem weiteren Ausführungsbeispiel der Erfindung mit zwei quer angeordneten Kassetten an einem Verbund von Kassetten;
- Fig. 31: eine Untersicht der Bodenwandung oder Deckenwandung nach Figur 30;
- Fig. 32: eine Seitenansicht eines Behandlungsmoduls mit einer Bodenwandung und einer Deckenwandung nach Figur 30;
- Fig. 33: eine Detailansicht eines Behandlungsmoduls mit einer Bodenwandung nach Figur 30;
- Fig. 34: eine Detailansicht eines Behandlungsmoduls mit **Tür** und einer Bodenwandung nach Figur 30;
- Fig. 35: Details einer Verbindung von Elementen einer Bodenwandung oder Deckenwandung nach einem Ausführungsbeispiel der Erfindung;
- Fig. 36: Details der Verbindung nach Figur 35;
- Fig. 37: einen Behandlungstunnel zum Kühlen nach einem Ausführungsbeispiel der Erfindung;
- Fig. 38: einen Behandlungstunnel zur Querförderung von beispielsweise Fahrzeugkarossen nach einem Ausführungsbeispiel der Erfindung;
- Fig. 39: eine Fertigungsanlage für Behandlungsmodule nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

Die Erfindung ist im Folgenden beispielhaft an einem Behandlungsmodul bzw. Behandlungstunnel erläutert, das sich für einen Trocknertunnel für Lackieranlagen eignet. Die Erfindung kann jedoch auch für andere Gewerke eingesetzt werden.

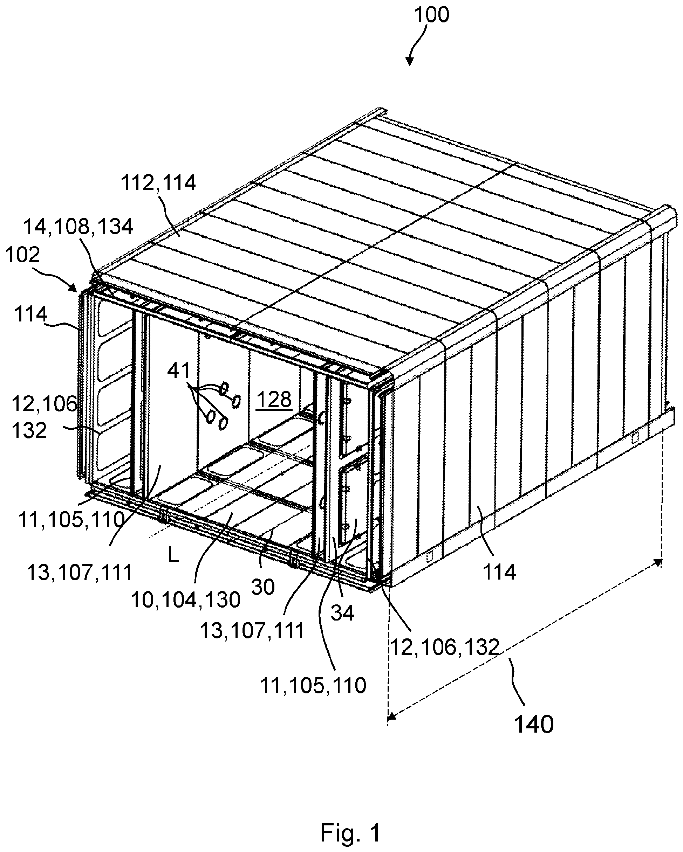

Figur 1 zeigt ein Behandlungsmodul 100 für einen Behandlungstunnel 200, der ein oder mehrere aufeinander folgende Behandlungsmodule 100 aufweisen kann, nach einem Ausführungsbeispiel der Erfindung.

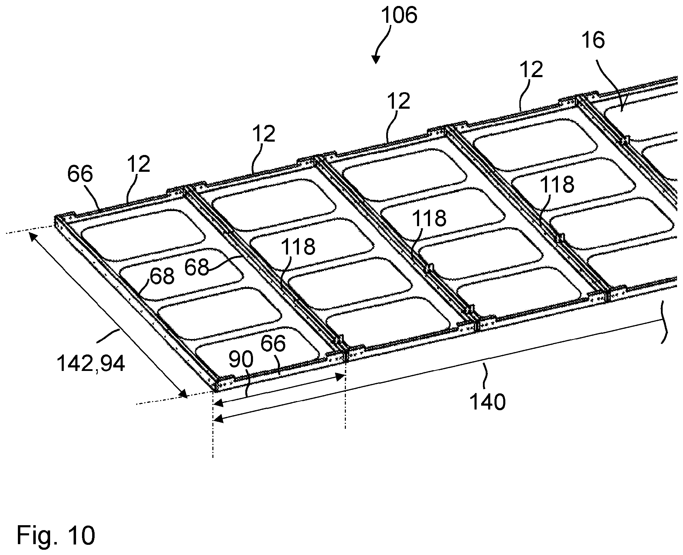

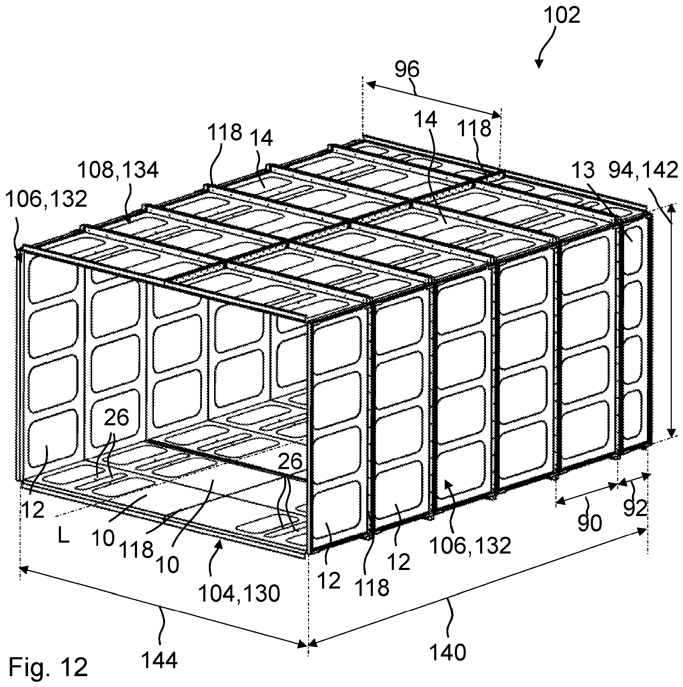

Das Behandlungsmodul 100 weist ein Innengehäuse 102 mit einer Erstreckung in einer Längsrichtung L auf. Das Innengehäuse 102 weist Flächenelemente 104, 105, 106, 107, 108 auf. Das Flächenelement 104 bildet eine Bodenwandung 130, das Flächenelement 106 Seitenwandungen 132 und das Flächenelement 108 eine Deckenwandung 134, während das Flächenelement 105 eine Innenwandung 110 und das Flächenelement 107 eine Innenwandung 111 bildet. Die Flächenelemente 104, 105, 106, 107, 108 weisen, wie in den Figuren 10 bzw. 12 dargestellt, jeweils eine Längserstreckung 140 in der Längsrichtung L und eine Quererstreckung 142 quer zur Längsrichtung L auf.

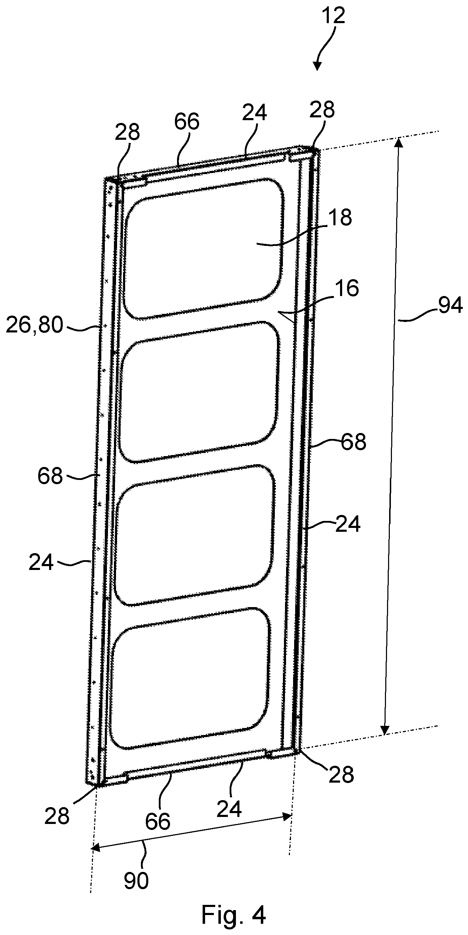

Die Flächenelemente 104, 105, 106, 107, 108 sind aus vorgefertigten Kassetten 10, 11, 12, 13, 14, insbesondere Blechkassetten, gebildet. welche Querseiten 66 mit einer Kassettenbreite 90, 92 in Längsrichtung L und Längsseiten 68 mit einer Kassettenlänge 94 quer zur Längsrichtung L aufweisen. Eine beispielhafte Kassette 12 ist in Figur 4 dargestellt.

Die Innenwandungen 110, 111 sind in gleicher Weise wie Bodenwandung 130, Seitenwandungen 132 und Deckenwandung 134 jeweils aus vorgefertigten Kassetten 11, 13 gefertigt.

Der Übersichtlichkeit halber sind jeweils gleichartige Elemente nur teilweise mit Bezugszeichen versehen. Insbesondere sind von den einzelnen Kassetten 10, 11, 12, 13, 14 der Übersichtlichkeit wegen nur jeweils eine mit einem Bezugszeichen beziffert.

Die Flächenelemente 104, 105, 106, 107, 108 sind zumindest in Längsrichtung L in ein Rastermaß unterteilt, das mit zumindest einer Kassettenbreite 90, 92 der Kassetten 10, 11, 12, 13, 14 in Längsrichtung L korrespondiert.

Die Kassetten 10, 11, 12, 13, 14 sind innerhalb des Flächenelements 104, 105, 106, 107, 108 mit ihren Längsseiten 68 quer zur Längserstreckung 140 und mit ihren Querseiten 66 parallel zur Längserstreckung 140 des Flächenelements 104, 105, 106, 107, 108 angeordnet und ihren Querseiten 66 quer zur Längserstreckung 140 und mit ihren Längsseiten 68 parallel zur Längserstreckung 140 des Flächenelements 104, 105, 106, 107, 108 angeordnet.

Die einzelnen vorgefertigten Kassetten 10, 11, 12, 13, 14 sind demnach in der Längserstreckung 140 der Flächenelemente 104, 105, 106, 107, 108 mit ihren Längsseiten 68 aneinandergefügt und in der Quererstreckung 142 der Flächenelemente 104, 105, 106, 107, 108 mit ihren Querseiten 66 aneinandergefügt angeordnet.

Jede Kassette 10, 11, 12, 13, 14 weist weiter eine oder mehrere Standardschnittstellen 80, 82, 84, 86 (in den Figuren 4 bis 7 und 9 dargestellt) für eine Verbindung mit einer benachbarten Kassette 10, 11, 12, 13, 14 zumindest im gleichen und/oder benachbarten Flächenelement 104, 105, 106, 107, 108 auf.

Die Standardschnittstellen 80, 82, 84, 86 zur Verbindung von Kassetten 10, 11, 12, 13, 14 und/oder Flächenelementen 104, 105, 106, 107, 108 sind verwechslungssicher nach dem Poka-Yoke-Prinzip ausgebildet. Die Flächenelemente 104, 105, 106, 107, 108 können mittels ineinandergreifenden Profilierungen der Kassetten 10, 11, 12, 13, 14 zueinander positioniert werden.

Im Inneren 128 des Innengehäuses 102 sind Innenwandungen 110 angeordnet, welche Filtereinsätze 34 aufweisen, beispielsweise zum Filtern von ins Innere des Innengehäuses 102 eingeblasener Luft. Weiter sind im Inneren Innenwandungen 111 angeordnet, welche Düsenauslässe 41 aufweisen, beispielsweise zum Einblasen von Luft ins Innere des Innengehäuses 102. Die Innenwandungen 110, 111 sind in als Nuten ausgebildeten Prägungen 30 der Kassetten 10, 14 von Bodenwandung 130 und Deckenwandung 134 positioniert und fixiert.

Das Innengehäuse 102 des Behandlungsmoduls 100 ist an seiner Außenseite von einem Außengehäuse 112 umgeben, welches aus einzelnen an den Flächenelementen 106, 108 angeordneten Außenverkleidungselementen 114 gebildet ist.

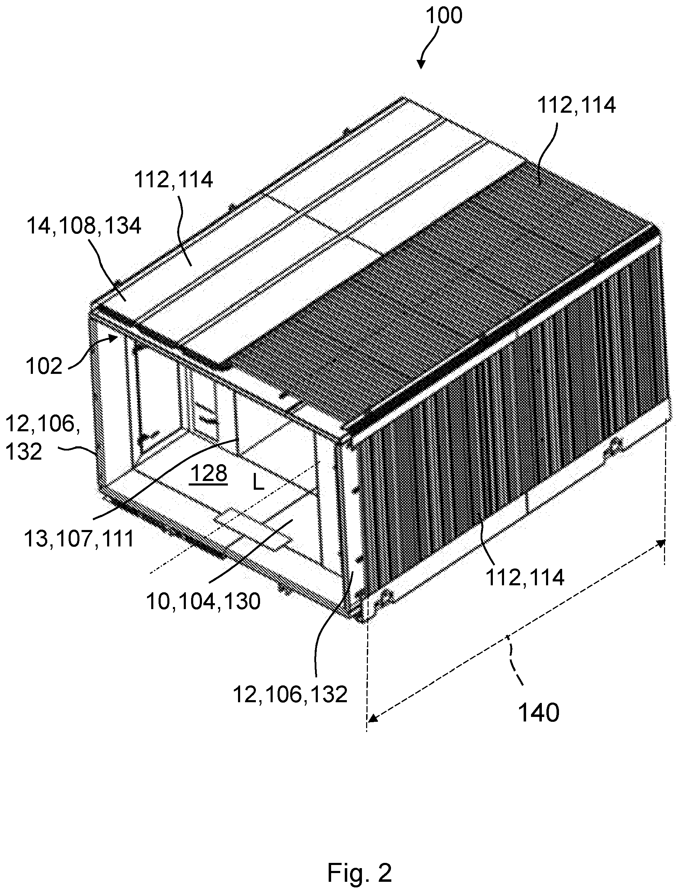

Figur 2 zeigt ein weiteres Behandlungsmodul 100 nach einem Ausführungsbeispiel der Erfindung mit Profilblechen als Außenverkleidungselementen 114. Beispielhaft sind bei der Deckenwandung 134 als Außenverkleidungselemente 114 sowohl Kassetten mit glatter Oberfläche als auch Profilblech, beispielsweise als Trapezblech, dargestellt. Das Profilblech kann als ein einziges Element ausgeführt sein und kann auch die komplette Außenverkleidung der Deckenwandung 112 bilden.

Die Kassetten 14 mit glatter Oberfläche sind hier innerhalb des Flächenelements 108 mit ihren Querseiten 66 quer zur Längserstreckung 140 und mit ihren Längsseiten 68 parallel zur Längserstreckung 140 des Flächenelements 108 angeordnet, was auch als quergeteilte Anordnung verstanden werden kann.

In der Figur ist die Seitenwandung 132 mit einem Profilblech als Außenverkleidungselement 114 abgedeckt. Profilblech kann vorteilhaft als preiswertes Außenverkleidungselement 114, insbesondere für eine Deckenwandung 134 und/oder eine Seitenwandung 132, eingesetzt werden.

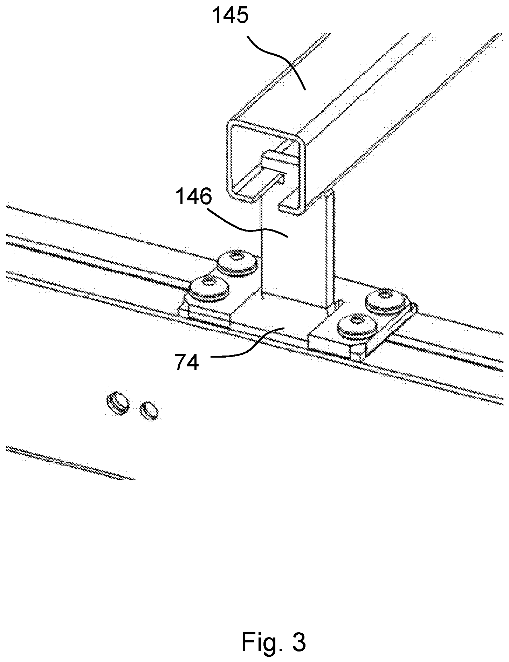

Figur 3 zeigt Details einer günstigen thermisch isolierten Halterung für ein Profilblech als Außenverkleidungselement 114 nach einem Ausführungsbeispiel der Erfindung. Gemäß einer vorteilhaften Ausgestaltung des Behandlungsmoduls 100 können als thermische Isolierung von einem oder mehreren Außenverkleidungselementen 114 in Form von Profilblechen Halter 146 eingesetzt werden, die thermisch mittels einer Isolierung 74, beispielsweise Glasfaser oder dergleichen, von dem Innengehäuse entkoppelt sind. Das oder die Profilbleche können an Querstreben 145, die als C-Träger ausgebildet sein können, angeordnet sein, welche auf dem Halter 146 befestigt sind.

In Figur 4 ist eine Kassette 12 einer Seitenwandung 106 des Behandlungsmoduls 100 nach Figur 1 dargestellt. Die Kassette 12 weist zwei sich an der Hauptfläche 16 gegenüberliegende Querseiten 66 mit einer Kassettenbreite 90 und zwei sich an der Hauptfläche 16 gegenüberliegende Längsseiten 68 mit einer Kassettenlänge 94 auf. Die vorgefertigte Kassette 12 weist in ihrer Hauptfläche 16 eingeprägte Versteifungsstrukturen 18 auf. Die Kassette 12 weist an ihren Außenrändern umlaufend Rahmenelemente 24 zur Versteifung der Kassette 12 auf. Die Ecken der Kassette 12 sind durch Eckverbindungen 28 der Rahmenelemente 24 gebildet. Die Außenseiten der Rahmenelemente 24 weisen als Standardschnittstellen 80 für eine Verbindung der Kassette 12 zu einer benachbarten Kassette 12 im gleichen oder in einem benachbarten Flächenelement 106 Positionierelemente 26, beispielsweise in Form von Bohrungen auf. Optional können auch Prägungen, Aussparungen, Ausstanzungen oder dergleichen vorgesehen sein.

Damit können die Kassetten 12 und daraus aufgebaute Flächenelemente 106 auch ohne zusätzliche Fügeprozesse in sich stabil und verwindungssteif ausgebildet sein. Es ergibt sich vorteilhaft eine höhere Stabilität durch die Kassettenbauweise auf Grund der Materialdopplung mit jeweils geschlossenen Ecken. Die Eckverbindungen 28 können vorteilhaft eine mechanische Verriegelung und Versteifung der Kassetten 12 bieten.

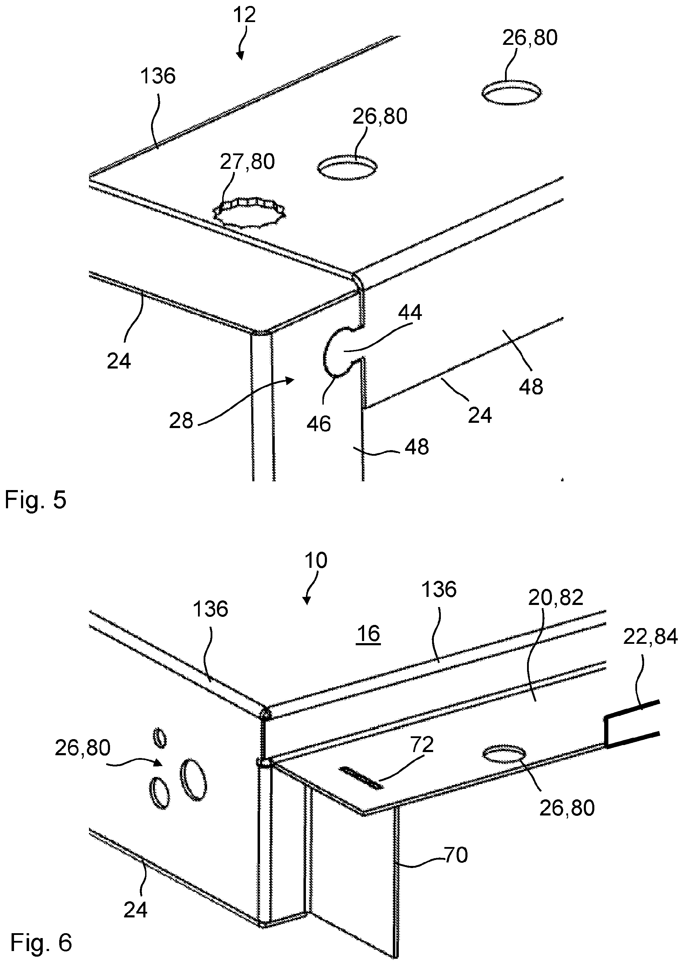

In Figur 5 ist dazu die Eckverbindung 28 der Kassette 12 nach Figur 4 im Detail dargestellt. Die Rahmenelemente 24, welche in Form von abstehenden oder abgewinkelten Laschen oder Umkantungen 48 ausgebildet sein können, sind in der Eckverbindung 28 zusammengeführt und verbunden. Die geschlossenen und verriegelten Eckverbindungen 28 sind sowohl zur Verbindung als auch zur Versteifung der abgewinkelten Rahmenelemente 24 der Kassette 12 vorgesehen. Die Eckverbindung 28 ist durch ein Verriegelungselement 44 des einen Rahmenelements 24, welches in eine Aussparung 46 des um 90° versetzten Rahmenelements 24 greift, fixiert und verriegelt.

Damit können die Kassetten 12 und daraus aufgebauten Flächenelemente 106 auch ohne zusätzliche Fügeprozesse in sich stabil und verwindungssteif ausgebildet sein. Es ergibt sich vorteilhaft eine höhere Stabilität durch die Kassettenbauweise auf Grund der Materialdopplung mit jeweils geschlossenen Ecken. Die Eckverbindungen 28 können vorteilhaft eine mechanische Verriegelung der Kassetten 12 bieten.

Weiter sind in dem Rahmenelement 24, welches das Verriegelungselement 44 aufweist, Positionierelemente 26, 27 in Form von Bohrungen 26, bzw. eines geränderten Durchbruchs 27 als Standardschnittstellen 80 zur Verbindung mit einer benachbarten Kassette 12 angeordnet.

Mögliche Schweißkanten 136 zur Verbindung mit benachbarten Kassetten 10, 11, 12, 13, 14 sind in den Figuren 5, 6 und 7 an den Kanten zwischen einer Hauptfläche 16 der Kassette 12 und dem Rahmenelement 24 bezeichnet.

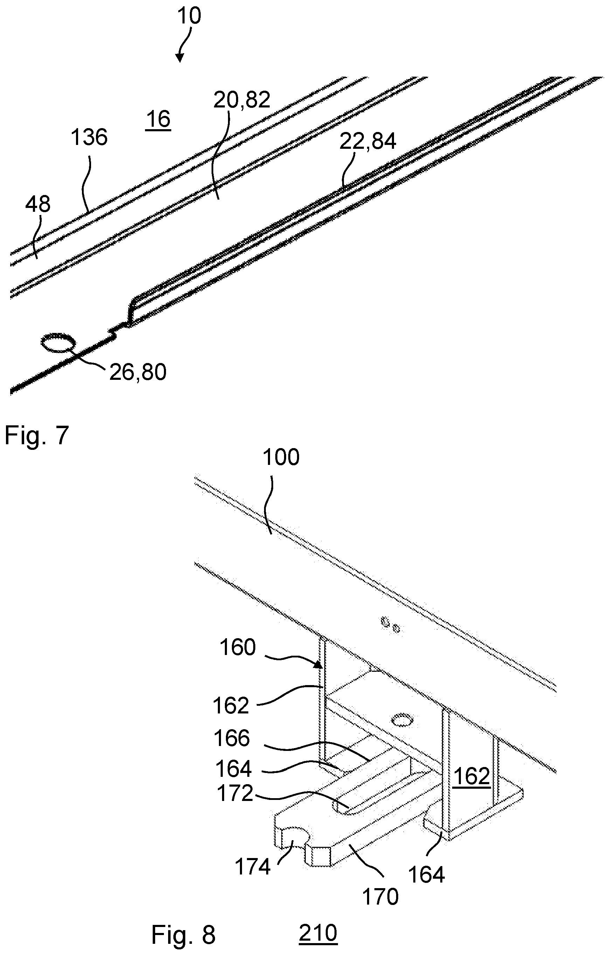

In Figur 6 ist weiter eine Auflageleiste 20 einer Kassette 10 einer Bodenwandung 130 nach einem Ausführungsbeispiel der Erfindung im Detail dargestellt. Die Auflageleiste 20 dient als Standardschnittstelle 82 zwischen einer Seitenwandung 132 und einer Bodenwandung 130 und ist insbesondere zur Abstützung der Seitenwandung 132 ausgebildet. Die Seitenwandung 132 kann auf der Auflageleiste 20 abgestellt werden. Die Auflageleiste 20 ist als abgewinkelte Lasche ausgebildet, welche durch ein Abstützelement 70, das in eine Aussparung 72 der Auflageleiste 20 greift, abgestützt und versteift wird. Die Auflageleiste 20 weist weiter ein Positionierelement 26 in Form einer Bohrung als Standardschnittstelle 80 auf. Weiter weist die Auflageleiste eine Anpressleiste 22 zur Positionierung einer Seitenwandung 132 auf, deren Funktion in der Beschreibung zu Figur 7 erläutert ist.

Auch in dem Rahmenelement 24 sind Positionierelemente 26 in Form von Bohrungen als Standardschnittstelle 80 angeordnet. Damit ist eine einfache und reproduzierbare Positionierung der Seitenwandung 132 beim Aufbau des Behandlungsmoduls 100 ermöglicht. Optional können statt oder zusätzlich zu Bohrungen auch Prägungen, Aussparungen, Ausstanzungen oder dergleichen vorgesehen sein.

In Figur 7 ist eine Auflageleiste 20 mit einer Anpressleiste 22 einer Kassette 10 einer Bodenwandung 130 nach einem Ausführungsbeispiel der Erfindung dargestellt. Die Anpressleiste 22 kann als eine weitere Standardschnittstelle 84 zwischen einer Seitenwandung 132 und einer Bodenwandung 130 dienen. Wenn die Seitenwandung 132 auf die Auflageleiste 20 gestellt wird, wird die Seitenwandung 132 durch die Anpressleiste 22 in einer dadurch gebildeten Nut fixiert. Die Schweißkante 136 zur dauerhaften Verbindung zwischen Bodenwandung 130 und Seitenwandung 132 ist zwischen der Hauptfläche 16 und der Auflageleiste 20 angeordnet. Da in dem Aufbau des Behandlungsmoduls 100 im Bereich der Rahmenelemente 24 der Kassetten 10, 11, 12, 13, 14 geschweißt wird, ist die Wärmeabfuhr durch zusätzliches Material verbessert und es kommt zu weniger Wärmeverzug in den Bauteilen. Die Schweißung bringt zusätzliche Stabilität in den Aufbau des Behandlungsmoduls 100.

Figur 8 zeigt eine Montageanordnung für ein Behandlungsmodul 100 nach einem Ausführungsbeispiel der Erfindung. Diese Montageanordnung erleichtert vorteilhaft eine Montage an einem Aufstellort 210. Zur Montage kann ein Losfuß als Anlagenfuß 160 des Behandlungsmoduls 100 eingesetzt sein. Dabei wird zuerst ein Führungselement 170 auf dem Boden des Aufstellortes 210 montiert, über welchem der Anlagenfuß 160 angeordnet wird. Der Anlagenfuß 160 steht mit zwei L-förmigen Schenkeln 162 auf dem Aufstellort 210 auf, an deren bodenseitigen Enden zwei Platten 164 nach innen weisen. Zwischen den Platten 164 ist eine längliche Öffnung 166 angeordnet. Die beiden Schenkel 162 umgreifen mit den Platten 164 das Führungselement 170 an zwei Seiten, wobei die Platten 164 durch das Führungselement 170 geführt werden können. So kann sich der Anlagenfuß 160 bei temperaturbedingten Längenausdehnung des Behandlungsmoduls 100 einfach entlang dieses Führungselements 170 verschieben.

Das Führungselement 170 weißt innen ein Langloch 172 auf, das es erlaubt, das Führungselement 170 am Aufstellort 210 festzuschweißen. Am freien Ende des Führungselements 170 ist an der Außenseite eine Einkerbung 174 angeordnet, in der ebenfalls eine Schweißnaht angebracht werden kann. Auf diese Weise kann erreicht werden, dass eine Schweißnaht in einem Bereich angebracht werden kann, die eine relative Bewegung zwischen Führungselement 170 und Anlagenfuß 160 nicht behindert.

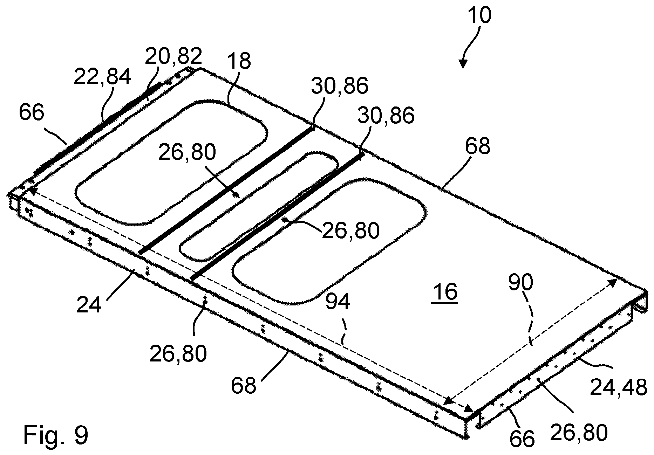

Figur 9 zeigt eine Kassette 10 einer Bodenwandung 130 nach einem Ausführungsbeispiel der Erfindung. Die Kassette 12 weist zwei sich an der Hauptfläche 16 gegenüberliegende Querseiten 66 mit einer Kassettenbreite 90 und zwei sich an der Hauptfläche 16 gegenüberliegende Längsseiten 68 mit einer Kassettenlänge 94 auf. Die Kassette 10 weist als Standardschnittstellen 80, 82, 84, 86 für eine Verbindung der Kassette 10 zu einer benachbarten Kassette 10, 11, 12, 13, 14 in verschiedenen aneinander angrenzenden Flächenelementen 104, 105, 106, 107, 108 Rahmenelemente 24 mit Positionierelementen 26 und Prägungen 30, insbesondere von Prägungen 30 in der Hauptfläche 16 der Kassette 10 auf. Die Positionierelemente 26 sind auf gegenüberliegenden Rahmenelementen 24 sowie auf der Hauptfläche 16 als Bohrungen, Erhebungen oder Vertiefungen angeordnet. Eine Querseite 66 der Kassette 10 weist eine Auflageleiste 20 mit einer Anpressleiste 22 zur Verbindung mit einer Seitenwandung 132 auf. Die andere Querseite 66 weist ein weiteres Rahmenelement 24 in Form einer abgewinkelten Lasche 48 mit Positionierelementen 26 auf.

Im Ausführungsbeispiel der Figur 9 ist die Kassette 10 lediglich halb so lang ausgebildet wie die Bodenwandung 130 breit ist, so dass zwei an ihren Querseiten 66 aneinandergefügte Kassetten 10 für die Bodenwandung 130 notwendig sind. Dies hat den Vorteil, dass auch große Abmessungen von Bodenbreiten gefertigt werden können, die in üblichen kommerziell erhältlichen Bearbeitungsmaschinen so nicht hergestellt werden könnten.

Die Prägungen 30 als weitere Standardschnittstelle 86 in Form von quer verlaufenden Nuten auf der Hauptfläche 16 der Kassette 10 sind zum Positionieren von Innenwandungen 110, 111 des Innengehäuses 102 vorgesehen. Aufrecht stehende Innenwandungen 110, 111 können in die Prägungen 30 eingreifen und dadurch lateral fixiert werden. Die Prägungen 30 können erhaben oder vertieft ausgebildet sein. Zueinander zu positionierende Elemente sind diesbezüglich komplementär ausgebildet sein. Prägungen können als Rillen/Stege ausgebildet sein, oder auch rund, eckig, oder als Nuten ausgebildet sein.

Eine Bodenwandung 130 kann so beispielsweise als Standardschnittstelle 86 für eine Innenwandung 110 eine Prägung 30 in einer Hauptfläche 16 der Kassette 10 zum Einstecken der Innenwandung 110 aufweisen. Damit ist eine einfachere Montage der Innenelemente 110 des Behandlungsmoduls 100 realisierbar. Alternativ oder zusätzlich können auch weitere Positionierelemente 26 wie Bohrungen, kreisförmige oder rechteckförmige Erhebungen oder Vertiefungen zur Positionierung von Innenwandungen 110, 111 vorgesehen sein. Bei der Bodenwandung 130 in Figur 9 wie auch in Figur 12 sind solche Positionierelemente 26 als dunkle Punkte eingezeichnet. Typischerweise können solche Erhebungen oder Vertiefungen eine Höhe von wenigen mm, beispielsweise 2,5 mm aufweisen.

In Figur 10 ist ein Flächenelement 106 aus vorgefertigten Kassetten 12 nach einem Ausführungsbeispiel der Erfindung dargestellt. Die Kassetten 12 sind an ihren Längsseiten 68 über Fügenähte 118 miteinander verbunden zu einem großen Flächenelement 106, das beispielsweise als Seitenwandung 132 einsetzbar ist. Das Flächenelement 106 weist eine Längserstreckung 140 und eine Quererstreckung 142 auf. In Figur 10 ist nicht die volle Länge des Flächenelements 106 dargestellt. Dabei entspricht die Quererstreckung 142 des Flächenelements 106 der Kassettenlänge 94 einer Kassette 12, während die Längserstreckung 140 einem Vielfachen der Kassettenbreite 90 einer Kassette 12 entspricht, nämlich der Anzahl der Kassetten 12, aus welchen aneinandergefügt das Flächenelement 106 gebildet ist.

Die benachbarten Kassetten 12 können beispielsweise entlang der Fügenähte 118 mittels wenigstens einem der Fügeverfahren Nieten, Schrauben, Clinchen, Schweißen, insbesondere Widerstandsschweißen, oder dergleichen, verbunden sein. Dazu können die Rahmenelemente 24 der einzelnen Kassetten 12 Positionierelemente 26 aufweisen, welche bei aneinandergefügten Kassetten 12 komplementär zueinander ausgebildet sein können und beispielsweise ineinandergreifen können oder gleich liegende Bohrungen für das Verbinden mit Nieten aufweisen können.

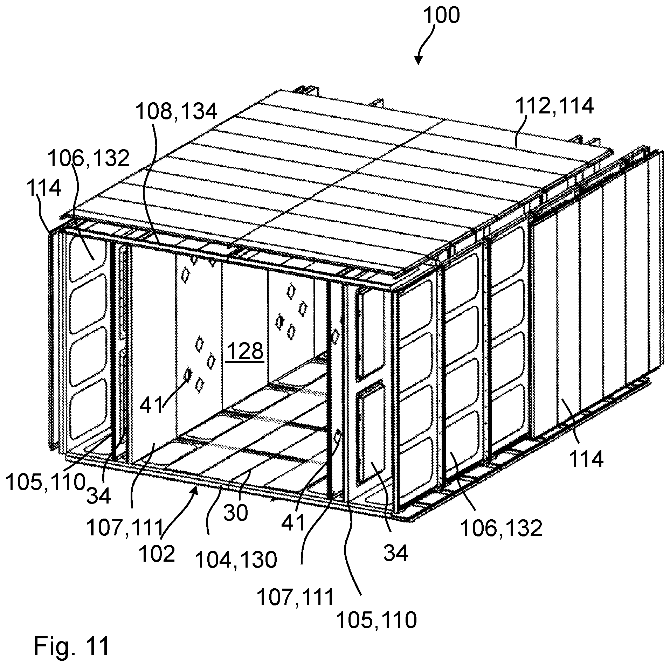

Figur 11 zeigt ein teilweise gefügtes Behandlungsmodul 100 nach einem Ausführungsbeispiel der Erfindung, während in Figur 12 die Außenhülle des Innengehäuses 102 des Behandlungsmoduls 100 ohne Innenwandungen 110, 111 separat dargestellt ist. Das Innengehäuse 102 kann, wenn es an beiden Stirnseiten dicht abgeschlossen wird, vorteilhaft als dichter Raum vorgesehen sein.

Die aus einzelnen vorgefertigten Kassetten 10, 11, 12, 13, 14 gefügten Flächenelemente 104, 105, 106, 107, 108 sind in Form einer Bodenwandung 130, zweier Seitenwandungen 132 und einer Deckenwandung 134 sowie von Innenwandungen 110, 111 ausgebildet. Die beiden Seitenwandungen 132 sind auf der Leiste 20, 82 der Bodenwandung 130 angeordnet und von der Innenseite des Gehäuses 102 verschweißt. Die Deckenwandung 134 sitzt auf den beiden Seitenwandungen 132 auf. Die Außenverkleidungselemente 114 des Außengehäuses 112 sind teilweise abgenommen, um die Details des Innengehäuses 102 besser zu erkennen.

Innenwandungen 110, 111 mit Filtereinsätzen 34, bzw. mit Düsenauslässen 41 sind in Prägungen 30 der Bodenwandung 130 angeordnet.

Eine günstige Isolierung des Behandlungsmoduls 100 in Figur 11 kann eine Lage Isoliermaterial im Flächenelement 106 und eine weitere Lage im Außenverkleidungselement 114 vorsehen. Beide können vergleichbare Dicken aufweisen, beispielsweise 80 mm. Besonders günstig ist eine solche Anordnung von Isoliermaterial, wenn die Außenverkleidungselemente 114 wie in Figur 2 dargestellt quer zu den Flächenelementen verlaufen, d.h. mit den Längsseiten parallel zur Längserstreckung der Flächenelemente. Damit kann erreicht werden, dass Überlappungen der Stöße des Isoliermaterials möglichst gering sind.

In Figur 12 ist der Aufbau der einzelnen Flächenelemente 104, 106, 108 aus den vorgefertigten Kassetten 10, 12, 14 deutlich zu erkennen. Die Kassetten 10, 12, 14 sind jeweils über in der Längsrichtung L und quer zu der Längsrichtung L verlaufende Fügenähte 118 zu Bodenwandung 130, Seitenwandungen 132, bzw. Deckenwandung 134 verbunden, insbesondere verschweißt. Bodenwandung 130, Seitenwandungen 132 und Deckenwandung 134 können erfindungsgemäß einzeln aus den Kassetten 10, 12, 14 gefertigt und dann zu dem Innengehäuse 102 gefügt sein.

Exemplarisch ist eine Seitenwandung 132 bemaßt. Die Seitenwandung 132 besteht aus einem Flächenelement 106, welches eine Längserstreckung 140 und eine Quererstreckung 142 aufweist. Das Flächenelement 106 ist aus fünf gleichartigen Kassetten 12 mit gleicher Kassettenbreite 90 und einer Kassette 13 mit geringerer Kassettenbreite 92 gefügt. Daraus ergibt sich die Längserstreckung 140 des Flächenelements 106, während die Quererstreckung 142 sich aus der Kassettenlänge 94 einer Kassette 12 ergibt.

Bodenwandung 130 und Deckenwandung 134 sind ähnlich modular aus vorgefertigten Kassetten 10, 14 ausgebildet. In diesem Fall ergibt sich die Quererstreckung 144 der Flächenelemente 104, 108 aus der zweifachen Kassettenlänge 96 der Kassetten 10, 14, da jeweils zwei Kassetten 10, 14 quer zur Längsrichtung L entlang der Fügenaht 118 aneinandergefügt sind. Die Längserstreckung 140 der Bodenwandung 130 und der Deckenwandung 134 ist in diesem Beispiel gleich der Längserstreckung 140 der Seitenwandungen 132, damit Vorderseite und Rückseite des Behandlungsmoduls 102 in Längsrichtung L einen gleichen Abschluss aufweisen. Optional kann die Längserstreckung der einzelnen Flächenelemente 104, 105, 106, 107, 108 unterschiedlich sein. Bevorzugt können die Längserstreckungen der Flächenelemente 104, 105, 106, 107, 108 von Anschlussmodulen komplementär dazu ausgebildet sein.

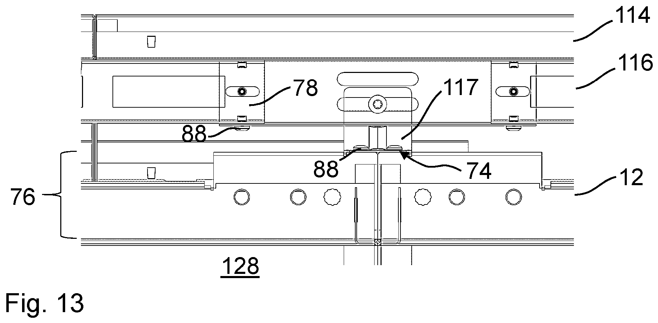

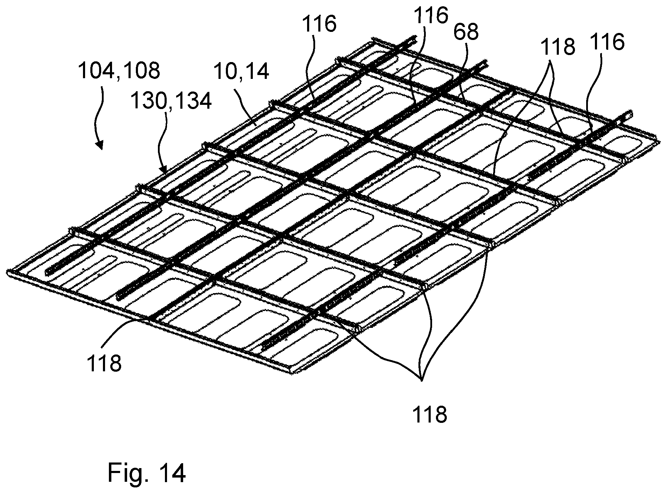

Figur 13 zeigt einen Querschnitt durch eine Kassette 12 mit Außenverkleidung 114 und Isolierung 76 nach einem Ausführungsbeispiel der Erfindung, während in Figur 14 ein Flächenelement 106 mit Aufhängeschienen 116 für ein Außenverkleidungselement 114 nach einem Ausführungsbeispiel der Erfindung dargestellt ist.

Am Innengehäuse 102 des Behandlungsmoduls 100 können vorteilhaft thermisch entkoppelte Halterungen 116, insbesondere Aufhängeschienen 116 für Außenverkleidungselemente 114 angeordnet sein. Diese Aufhängeschienen 116 dienen zur Aufnahme der Außenverkleidungselemente 114, welche dadurch trotz möglicher thermisch bedingter Bewegungen des Innengehäuses 102 an ihrem Ort bleiben und sich nicht bewegen. Außerdem werden die Außenverkleidungselemente 114 durch eventuell auftretende hohe Temperaturen des Innengehäuses 102 nicht beeinträchtigt.

Perforierte und thermisch mit Isoliermaterial 74 wie beispielsweise Glasfasermaterial entkoppelte Aufhängeschienen 116 für die Außenverkleidung 114 ermöglichen die thermische Entkopplung des Außengehäuses 112 des Behandlungsmoduls 100 auf vorteilhafte Weise. Die Aufhängeschienen 116 können gleitend gelagert sein, sodass sich eine Innenwandung des Innengehäuses 102 des Behandlungsmoduls 100 ausdehnen kann, ohne die Aufhängeschienen 116 und damit die Außenwandung zu verschieben. Diese Maßnahmen führen vorteilhaft zu weniger Wärmetransfer und weniger Wärmeverlusten.

Seitenwandungskassetten 12 können mit Isolierung 76 gefüllt sein, beispielsweise über eine Tiefe von 70 mm bis 80 mm, was einer typischen Tiefe der Rahmenelemente 24 der Kassetten 12 entspricht. Optional kann auch eine weitere Lage Isolierung (nicht dargestellt) zwischen den Aufhängeschienen 116 vorgesehen sein. An den Kassetten 12 sind Halter 117 zur Aufnahme der Aufhängeschienen 116 mittels Nieten 88 angebracht, wobei zwischen Halter 117 und der Kassette 12 Isoliermaterial 74 wie beispielsweise Glasfasermaterial zur thermischen Entkopplung des Halters 117 vom Innengehäuse 102 angeordnet ist. Das Innere 128 des Innengehäuses 102 ist in Figur 13 zur Orientierung markiert. Verbindungselemente 78 von Aufhängeschienen 116 können ebenfalls mit Nieten 88 an den Kassetten 12 fixiert sein.

Figur 14 zeigt ein Flächenelement 104, 108, wie es für eine Bodenwandung 130 (Flächenelement 104) oder Deckenwandung 134 (Flächenelement 108) eingesetzt werden kann. Das Flächenelement 104, 108 besteht aus einzelnen Kassetten 10 (für eine Bodenwandung 130) oder 14 (für eine Deckenwandung 134) Auf der Außenseite sind Aufhängeschienen 116 angeordnet. Dabei können die Aufhängeschienen 116 entlang der Längsseiten 68der Kassetten 10, 14, als auch quer dazu verlaufen. Aus Gründen der Übersichtlichkeit sind Bezugszeichen nur exemplarisch dargestellt. Die Außenverkleidungselemente 114 können zweckmäßigerweise einzeln an die Aufhängeschienen 116 montiert werden. Bodenwandung 130 und Deckenwandung 132 können vorzugsweise in gleicher Weise wie die seitliche Außenwandung 106 mit Isolierung versehen werden.

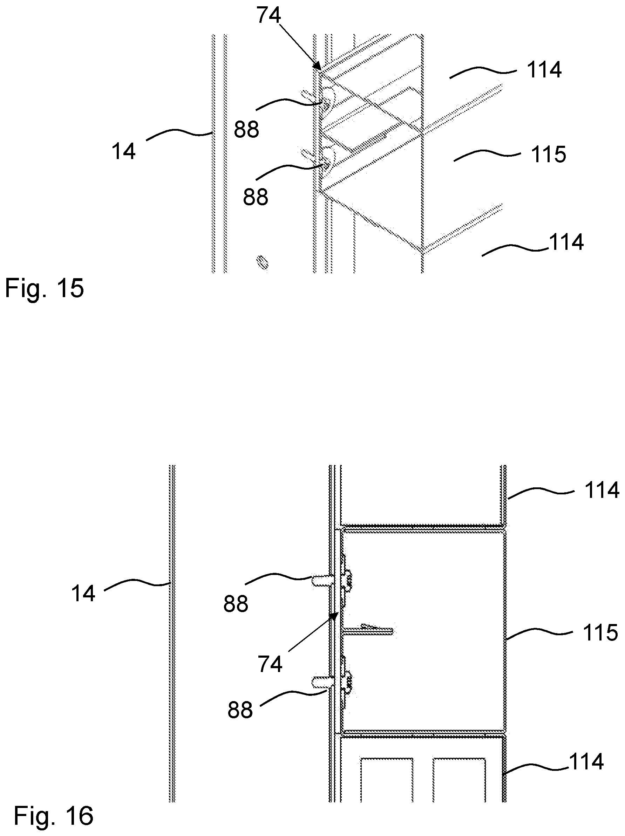

Die Figuren 15 und 16 zeigen ein weiteres Ausführungsbeispiel der Erfindung als Schnitt durch eine Kassette 14 mit Außenverkleidung und Isolierung, wobei Figur 15 eine perspektivische Ansicht einer aufgeschnittenen Anordnung und Figur 16 eine Draufsicht auf den Schnitt nach Figur 15 zeigt.

Das Isoliermaterial 74 ist zwischen der Kassette 14 und dem nicht näher bezeichneten Halter mit den Nieten 88 angeordnet, damit die thermische Brücke unterbrochen wird. Das Isoliermaterial 74 ist beispielsweise Glasfasermaterial oder dergleichen. Ein Wärmeverzug kann bei dieser Ausgestaltung mit Langlöchern in den Außenverkleidungselementen 114 kompensiert werden. Weiteres, nicht näher bezeichnetes Isoliermaterial mit größerer Dicke, beispielsweise 80 mm ist in dem Hohlraum der Außenverkleidungselemente 114 angeordnet. Ebenso kann weiteres Isoliermaterial mit größerer Dicke, beispielsweise 80 mm, im Hohlraum der Kassette 14 angeordnet sein. Günstig ist dies, wenn die Außenverkleidungselemente 114 wie in Figur 2 dargestellt quer zu den Flächenelementen verlaufen, damit die Überlappungen der Stöße des Isoliermaterials möglichst gering sind. In dieser Anordnung kann der Halter mit den Nieten 88 mit einem Deckblech 115 abgedeckt sein, das zwischen zwei Außenverkleidungselementen 114 angeordnet ist und mit diesen fluchtet.

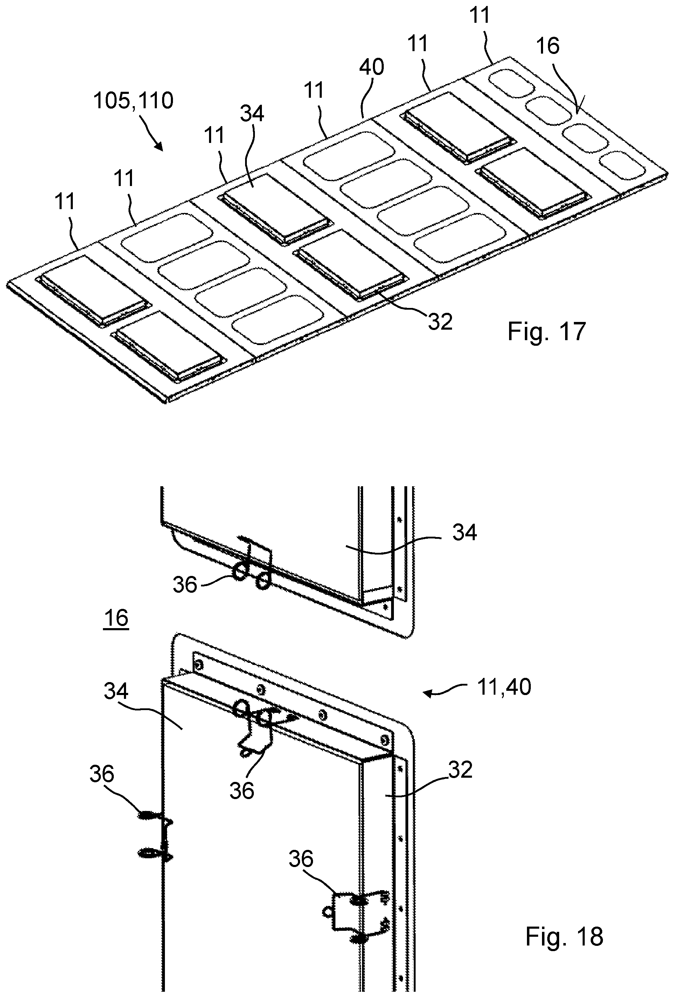

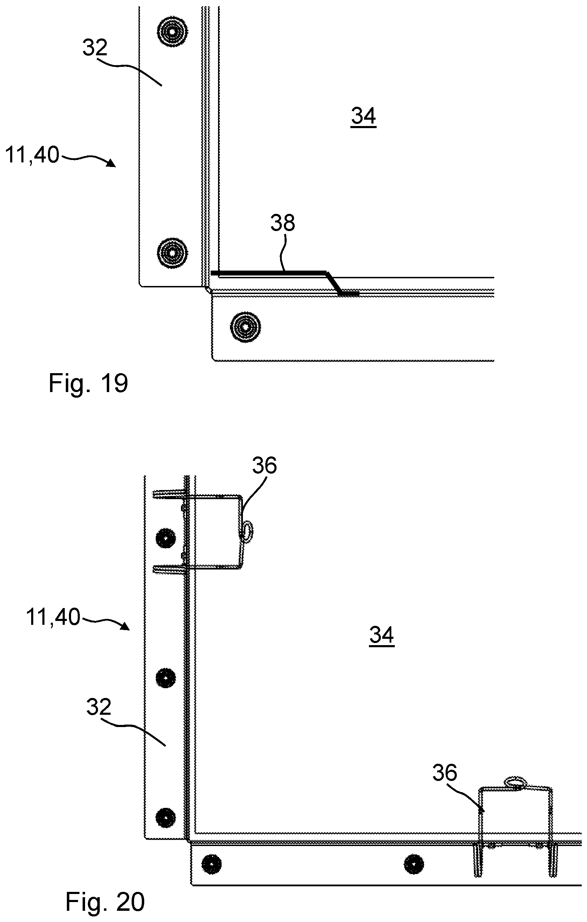

Figur 17 zeigt eine Innenwandung 110 mit Filtereinsätzen 34 nach einem Ausführungsbeispiel der Erfindung, während in Figur 18 Filtereinsätze 34 nach Figur 17 in vergrößerter Darstellung zu erkennen sind. Figur 19 zeigt Details der Befestigung eines Filtereinsatzes nach Figur 17, während in Figur 20 Details der Befestigung eines weiteren Filtereinsatzes nach Figur 17 dargestellt sind.

Die Innenwandung 110, welche als eine einzelne Kassettenwandung 40 vorteilhaft aus Kassetten 11 gleicher Dimension wie die entsprechenden Seitenwandungen 132 des Behandlungsmoduls 100 gebildet sein kann, ist zur Aufnahme von einem oder mehreren Filterrahmen 32 vorgesehen, wobei Filtereinsätze 34 mittels Klammern 36, 38 in den Filterrahmen 32 fixiert oder fixierbar sind. Die Kassettenwandung 40 in Figur 17 weist sechs solcher Filtereinsätze 34 auf, welche jeweils in Anordnungen von zwei Filtereinsätzen 34 nebeneinander positioniert sind. Dabei sind Filtereinsätze 34 nur auf jeder zweiten Kassette 11 angeordnet.

Die Filtereinsätze können in den Filterrahmen 32 jeweils mit mehreren Klammern 36 fixiert werden, wie insbesondere in den Figuren 18 und 20 dargestellt ist. Diese Klammeranordnung ist im Wesentlichen für größere Filtereinsätze vorgesehen, welche von einer Außenseite der Innenwandung 110 angeordnet werden.

Auf diese Weise ist es möglich, vorteilhaft einen Universal-Filterrahmen 32 einzusetzen. Ein Gegenrahmen am Filtereinsatz 34 kann günstigerweise dadurch entfallen. Ein solch integrierter Befestigungsmechanismus ohne Gegenrahmen für Filtereinsätze 34 kann vorteilhaft ermöglichen, verschiedene Filtergrößen einzusetzen. Der Universal-Filterrahmen 32 mit Prägungen kann beispielsweise kleine Filtereinsätze aufnehmen, die von einer Innenseite der Kassettenwandung 40 mit Klammern 38 geklemmt werden, während große Filtereinsätze 34 von einer Außenseite her mit Klammern 36 geklemmt werden können.

In Figur 19 ist eine Variante mit kleineren Filtereinsätzen 34 dargestellt, welche bevorzugt von einer Innenseite der Innenwandung 110 mit einer alternativen Ausführung von Klammern 38 in den Filterrahmen 32 gehalten werden.

In Figur 20 ist die Variante mit größeren Filtereinsätzen 34 dargestellt, welche bevorzugt von der Außenseite der Innenwandung 110 mit den Klammern 36 in den Filterrahmen 32 gehalten werden.

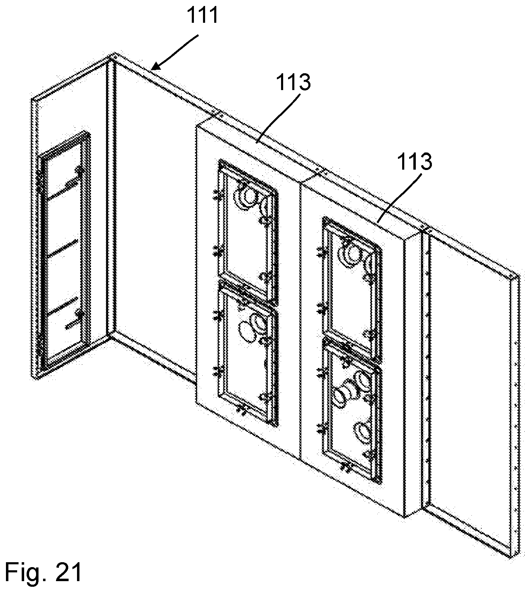

Figur 21 zeigt eine Innenwandung 111 mit Filterboxen 113 nach einem weiteren Ausführungsbeispiel der Erfindung, die alternativ oder zusätzlich anstelle einer Filterwand mit Filtereinsätzen, wie sie in den Figuren 19, 20 dargestellt sind, eingesetzt werden. Vorteilhaft kann eine Filterbox 113 sich über die komplette Kassettenbreite und Kassettenhöhe erstrecken. Dies erlaubt eine bessere Zugänglichkeit zu den Kassetten innerhalb des Behandlungsmoduls 100.

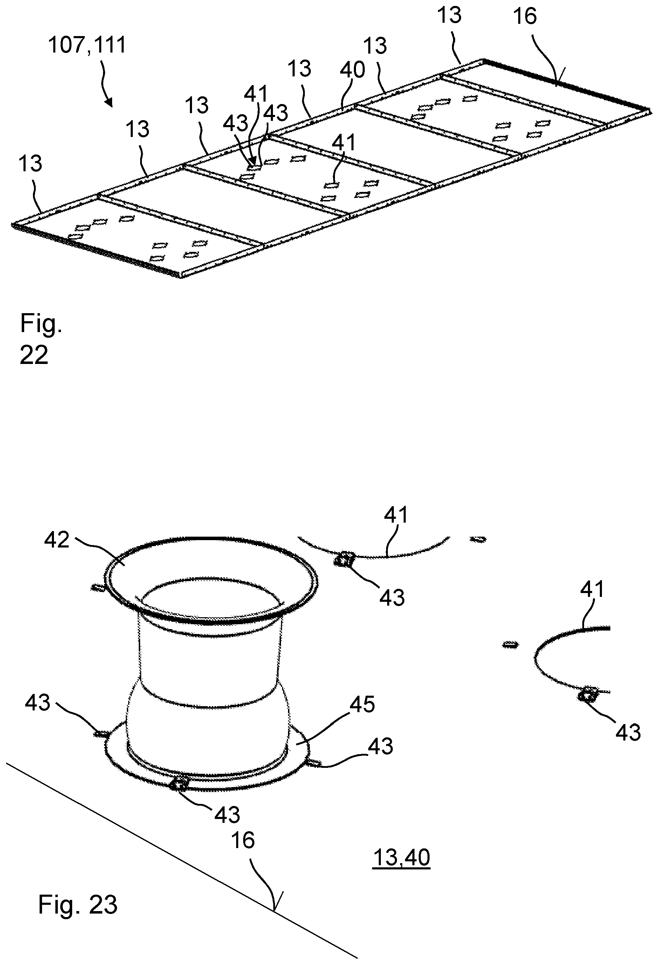

Figur 22 zeigt eine Innenwandung 111 mit Düsenauslässen 41 nach einem Ausführungsbeispiel der Erfindung, während in Figur 23 eine in einer Innenwandung 111 nach Figur 22 montierte Düse 42 dargestellt ist.

Die Innenwandung 111, welche als eine einzelne Kassettenwandung 40 vorteilhaft aus Kassetten 13 gleicher Dimension wie die entsprechenden Seitenwandungen 132 des Behandlungsmoduls 100 gebildet sein kann, ist zur Aufnahme von einer oder mehreren Düsen 42 vorgesehen. Dafür weist die Innenwandung 111 in der Hauptfläche 16 der Kassettenwandung 40 mehrere Düsenauslässe 41 auf. Dabei sind Düsenauslässe 41 entsprechend zur Anordnung der Filtereinsätze 34 in den Kassetten 11 nur auf jeder zweiten Kassette 13 angeordnet.

Wie in Figur 23 zu erkennen, ist die Schnittstelle 43 zwischen der Innenwandung 111 und einer Düse 42 als eine Nut/Federhalterung 43 ausgebildet. Dafür sind auf der Kassettenwandung 40 rund um den Düsenauslass 41 mehrere Verriegelungslaschen der Nut/Federhalterung 43 angeordnet, in welche die Düse 42 mit einem Bund 45 ohne zusätzliches Werkzeug seitlich eingeschoben werden kann. Dadurch kann die Düse auf der Kassettenwandung 40 automatisch verriegelt werden.

Auf diese Weise ist es vorteilhaft möglich, einen nötigen Wechsel der Düsen 42 schneller und ohne Werkzeug durchzuführen. So ist eine werkzeugfreie Düseninstallation durch Kassetten 10 mit integrierten Haltern 43 und Verriegelung möglich.

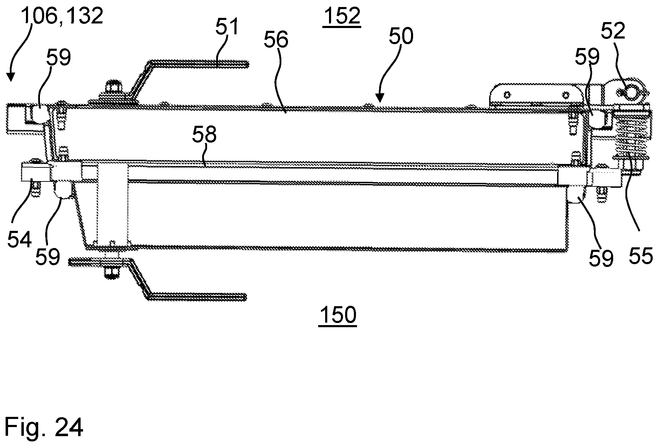

Figur 24 zeigt einen Querschnitt durch ein Türsegment 50 nach einem Ausführungsbeispiel der Erfindung. Das Türsegment 50 kann in einer Seitenwandung 132 als Teil oder Ersatz einer Kassette 12 angeordnet sein und eine Verbindung zwischen dem heißen Innenbereich 150 des Innengehäuses 102 und dem kalten Außenbereich 152 darstellen. Das Türsegment 50 ist thermisch entkoppelt in einem seitlichen Flächenelement 106 vorgesehen. Wenigstens ein Türscharnier 52 des Türsegments 50 weist dabei eine einstellbare Federkraft einer Feder 55 auf. Das Türsegment 50 kann mit einem Bedienhebel 51 von außen und innen geöffnet und geschlossen werden.

Die zusätzliche thermische Entkoppelung des Türsegments 50 kann vorteilhaft realisiert werden durch einen geteilten Türrahmen 54 mit einer zusätzlichen Dichtlippe 58, beispielsweise aus Glasfasermaterial, ein zweiteiliges thermisch entkoppeltes Türblatt 56, eine doppelte Dichtung 59 am Türblatt 56 sowie ein Türscharnier 52 mit einstellbarem Federmechanismus. Durch die Dichtungslippe 58 aus Glasfasermaterial kann der Zwischenraum zwischen Türrahmen 54 und Türblatt 56 vorteilhaft geteilt werden. Auf diese Weise kann eine Reduzierung der Wärmeverluste und Wärmebrücken an Türsegment 50 und Aufhängung der Außenverkleidung 114 erreicht werden. Eine verbesserte Dichtheit des Türsegments 50 ergibt sich durch eine zusätzliche Feder 55 am Türscharnier 52. Damit kann der Anpressdruck gezielt eingestellt werden, sodass das Türsegment 50 auf dem gesamten Umfang dicht schließt. Weniger Verschleiß der Türdichtung 59 tritt auf, da zwei Dichtungen 59 im Türblatt 56 montiert sind.

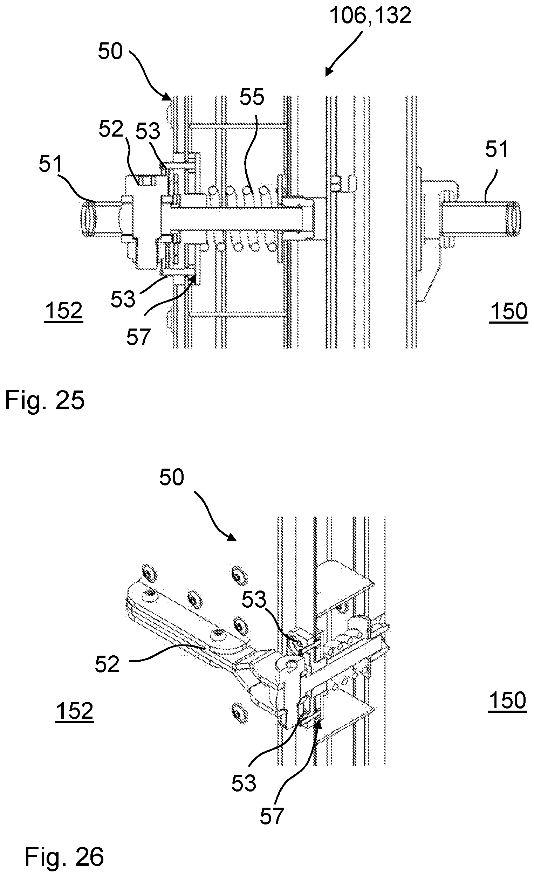

Figur 25 zeigt eine Draufsicht auf einen Schnitt durch ein Türsegment 50 nach einem weiteren Ausführungsbeispiel der Erfindung. Figur 26 zeigt eine perspektivische Ansicht des aufgeschnittenen Türsegments 50. Das Türsegment 50 kann in einer Seitenwandung 132 als Teil oder Ersatz einer Kassette 12 angeordnet sein und eine Verbindung zwischen dem heißen Innenbereich 150 des Innengehäuses 102 und dem kalten Außenbereich 152 darstellen. Das Türsegment 50 ist thermisch entkoppelt in einem seitlichen Flächenelement 106 vorgesehen. Wenigstens ein Türscharnier 52 des Türsegments 50 weist dabei eine einstellbare Federkraft auf. Das Türsegment 50 kann mit einem Bedienhebel 51 von außen und innen geöffnet und geschlossen werden. Die Federkraft kann mit einer Anpressplatte 57 über eine Einstellschraube 53 eingestellt werden, welche die Feder 55 mehr oder weniger zusammenpressen kann. Hierzu können von außen von der kalten Seite 152 her Einstellschrauben betätigt werden.

Die sonstige Ausgestaltung hinsichtlich thermischer Isolierung, Abdichtung und der dergleichen kann der Ausgestaltung des Türsegments 50 aus Figur 24 entsprechen.

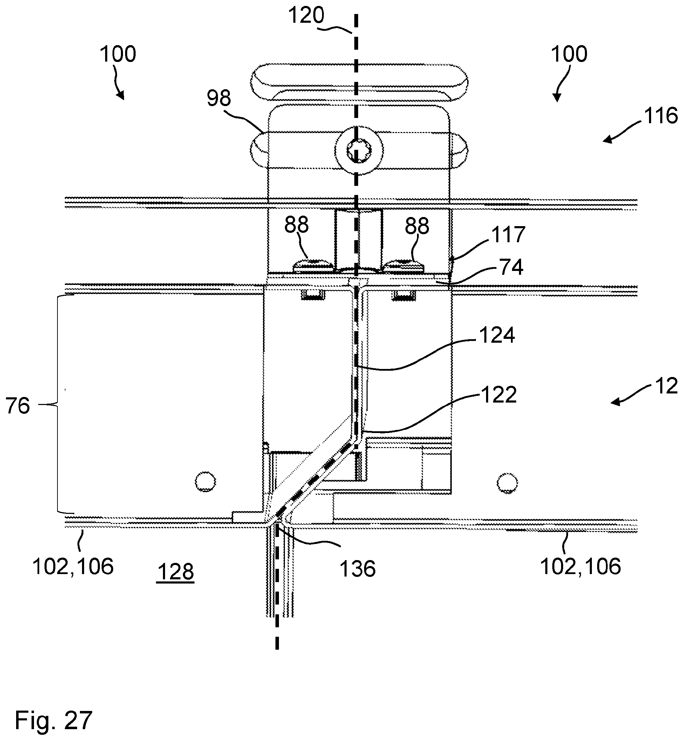

Figur 27 zeigt Details einer fixen Verbindung zweier Behandlungsmodule 100 mit einem integrierten Schweißrahmen 122 nach einem Ausführungsbeispiel der Erfindung. In Figur 27 ist als gestrichelte Linie die Modul-Verbindungsschnittstelle 120 eingezeichnet.

Eine integrierte Andockgeometrie, insbesondere ein in ein seitliches Flächenelement 106 integrierter Schweißrahmen 122 ist zur Montage von Behandlungsmodul 100 an Behandlungsmodul 100 vorgesehen, wodurch ein zusätzlicher Schweißrahmen zur Herstellung einer Modul-Modul-Verbindung eingespart werden kann. An den Verbindungsstößen der beiden Behandlungsmodule 100 sind so stabilere Kanten 124 vorhanden. Zusätzliche Abdeckungen im Bereich von Verbindungsstellen bei der Verbindung von Behandlungsmodul 100 zu Behandlungsmodul 100 können so entfallen.

Die im Behandlungsmodul 100 integrierte Andockgeometrie erleichtert die Montage von Behandlungsmodul 100 an Behandlungsmodul 100 insbesondere bei einem Aufbau beispielsweise beim Kunden vor Ort.

Kassetten 12 der Behandlungsmodule 100, welche in Figur 27 exemplarisch dargestellt sind, können mit Isolierung 76 gefüllt sein, beispielsweise über eine Tiefe von 70 mm bis 80 mm, was einer typischen Tiefe der Rahmenelemente 24 der Kassetten 12 entspricht. Optional kann auch eine weitere Lage Isolierung (nicht dargestellt) zwischen den Aufhängeschienen 116 vorgesehen sein. An den Kassetten 12 sind Halter 117 zur Aufnahme von Aufhängeschienen 116 für Außenverkleidungselemente 114 mittels Nieten 88 angebracht, wobei zwischen Halter 117 und der Kassette 12 Isoliermaterial 74 wie beispielsweise Glasfasermaterial zur thermischen Entkopplung des Halters 117 vom Innengehäuse 102 angeordnet ist. Die Aufhängeschienen 116 weisen Langlöcher 98 zur mechanischen Entkopplung der Außenverkleidungselemente 114 zum Innengehäuse 102 auf. Die Schweißkante 136 ist vom Inneren 128 der Behandlungsmodule 100 zugänglich.

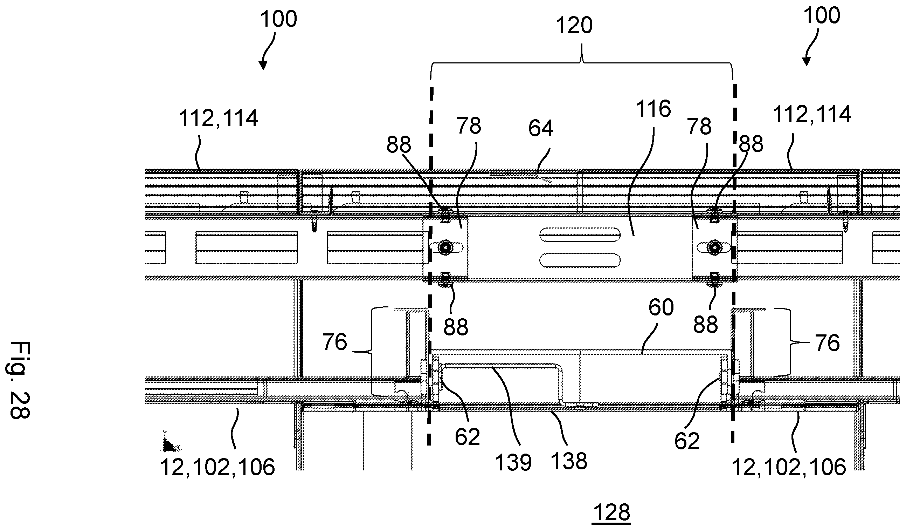

Figur 28 zeigt Details einer flexiblen Verbindung zweier Behandlungsmodule 100 nach einem Ausführungsbeispiel der Erfindung. Die Modul-Verbindungsschnittstelle 120 ist eingezeichnet.

Das Innengehäuse 102 des Behandlungsmoduls 100, welches aus vorgefertigten Kassetten 12 gefügt ist, ist von einem thermisch entkoppelten Außengehäuse 112 umgeben. Insbesondere ist das Innengehäuse 102 bei thermisch bedingter Längenänderung entlang der Längsrichtung L unabhängig beweglich angeordnet. Ein thermischer Kompensator 60 ist dabei für eine flexible Verbindung Behandlungsmodul 100 mit Behandlungsmodul 100 vorgesehen. Eine Teleskopverbindung 64 dient zur Verbindung wenigstens zweier Außenverkleidungselemente 114.

Der Kompensator 60 zum Ausgleich thermisch bedingter Änderungen mechanischer Dimensionen kann im Behandlungsmodul 100 vormontiert und von der Innenseite des Behandlungsmoduls 100 beispielsweise an Schraubpunkten 62 verschraubt werden. Dies ist auf Grund der guten Zugänglichkeit im Behandlungsmodul 100 möglich. Dadurch können Behandlungsmodule 100 auf einfachere Weise aneinandergefügt werden. Auch eine eventuell nötige Wartung des Kompensators 60 kann auf diese Weise einfacher erfolgen. Weiter kann bei einer solchen Anordnung des Kompensators 60 eine Querschnittsreduzierung in Kanälen des Behandlungsmoduls 100 vermieden werden, wodurch im Behandlungsmodul 100 auch weniger Druckverlust von eingeblasener Luft auftritt.

Mittels der Teleskopverbindung 64 kann eine einfachere Montage von Außenverkleidungselementen 114 erreicht werden. Dadurch ist eine Vorfertigung von Außenverkleidungsteilen 114 und eine bessere Austauschbarkeit von beschädigten Verkleidungsteilen 114 möglich. Damit kann kostenintensive Arbeit von der Installation beim Kunden vor Ort in die Fertigung des Behandlungsmoduls 100, bzw. Behandlungstunnels 200 verlagert werden.

Die Kassetten 12 der Flächenelemente 106 des Innengehäuses 102 sind wie bei dem Ausführungsbeispiel in Figur 27 mit beispielsweise 70 mm bis 80 mm dicker Isolierung 76 gefüllt. Optional kann auch eine weitere Lage Isolierung (nicht dargestellt) zwischen den Aufhängeschienen 116 vorgesehen sein. Aufhängeschienen 116 für die Außenverkleidungselemente 114 sind mit Haltern 78 mittels Nieten 88 an den Kassetten 12 fixiert. Die Außenverkleidungselemente 114 der Außenverkleidung 112 sind ebenfalls mit Nieten 88 an den Haltern 78 angeordnet. Außenverkleidungselemente 114 aneinander anschließender Behandlungsmodule 100 sind über die Teleskopverbindung 64 verbunden.

Der Kompensator 60, welcher beispielsweise aus Textilgewebe ausgebildet sein kann, ist über die Schraubpunkte 62 mit den Kassetten 12 der beiden Behandlungsmodule 100 verschraubt. Die Schraubpunkte 62 sind bei der Montage von dem Inneren 128 der Innengehäuse 102 zugänglich. Nach Verbindung der beiden Behandlungsmodule 100 kann die Verbindungsstelle des Kompensators 60 mit einem Abdeckblech 138 abgedeckt und so geschützt werden. Das Abdeckblech 138 kann über den Halter 139, welcher an einer Kassette 12 angeordnet ist, fixiert sein.

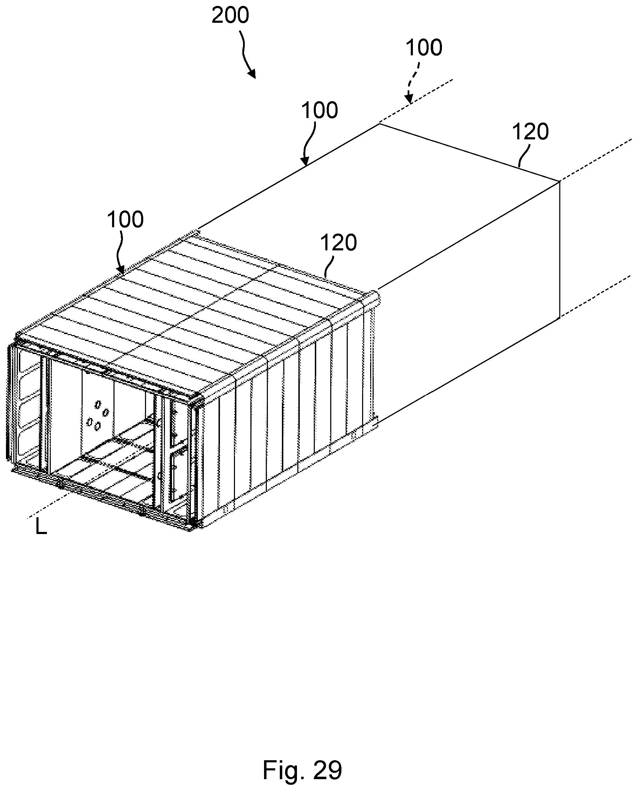

Figur 29 zeigt einen Behandlungstunnel 200 nach einem Ausführungsbeispiel der Erfindung. Der Behandlungstunnel 200 umfasst ein oder mehrere aufeinander folgende Behandlungsmodule 100. In Figur 29 ist ein Behandlungsmodul 100 mit zwei weiteren Behandlungsmodulen 100 dargestellt, welche schematisch angedeutet sind. Die Modul-Verbindungsschnittstelle 120 ist entlang der Verbindung von jeweils zwei Behandlungsmodulen 100 eingezeichnet.

Eine integrierte Andockgeometrie, insbesondere ein in ein Flächenelement 104, 105, 106, 107, 108 integrierter Schweißrahmen 122, wie in Figur 27 dargestellt, ist zur Montage von Behandlungsmodul 100 an Behandlungsmodul 100 vorgesehen.

Durch den integrierten Schweißrahmen 122 kann beispielsweise ein zusätzlicher Schweißrahmen für eine Montage verschiedener Behandlungsmodule 100 in einer aufeinander folgenden Anordnung entfallen. Auf diese Weise ist möglich, einen Behandlungstunnel 200 mit aneinandergereihten Behandlungsmodulen 100 zu realisieren, um verschiedene Fertigungsschritte, beispielsweise in einer Lackieranlage von Fahrzeugkarosserien, auf geeignete Weise zu verbinden. Der modulare Aufbau erleichtert ein Aufstellen des Behandlungstunnels 200 in einer Produktionsanlage beim Kunden vor Ort.

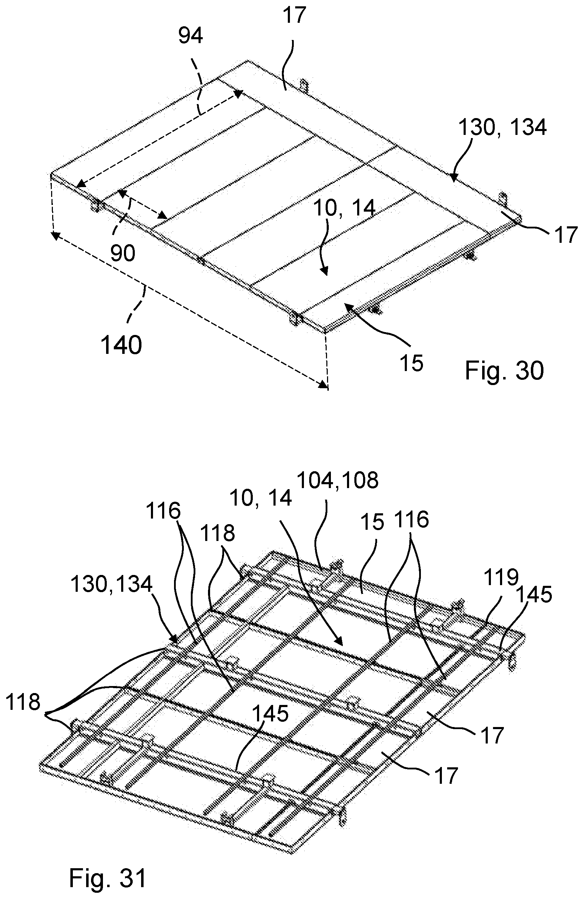

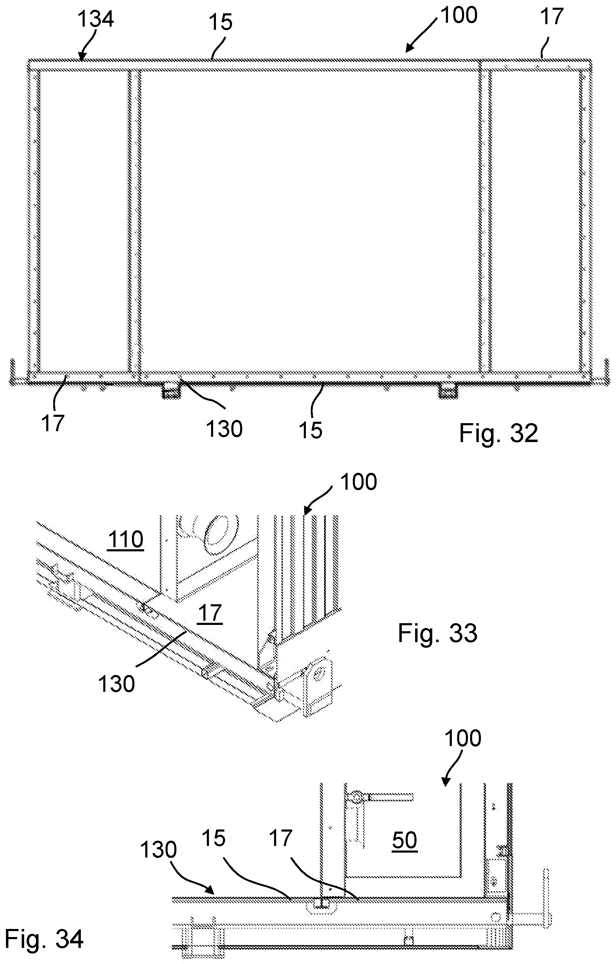

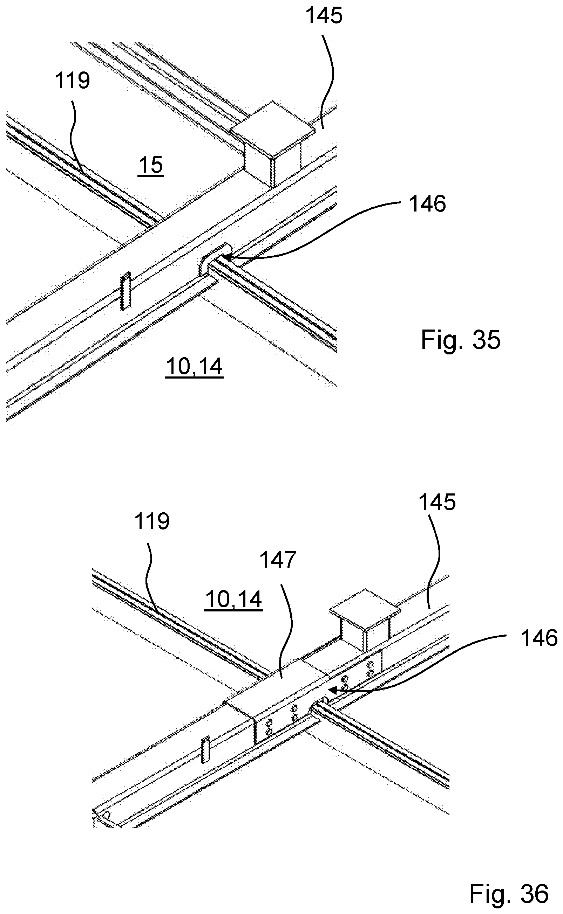

Die Figuren 30 bis 36 zeigen eine Ausgestaltung einer Bodenwandung 130 nach einem weiteren Ausführungsbeispiel der Erfindung in verschiedenen Ansichten und Anwendungsfällen bei einem Behandlungsmodul 100. Figur 30 zeigt dabei eine Draufsicht auf die Bodenwandung 130, die in Figur 31 als Untersicht dargestellt ist. Figur 32 zeigt eine Seitenansicht des Behandlungsmoduls 100 mit einer Bodenwandung 130 und einer Deckenwandung 134 nach Figur 30. Figur 33 zeigt eine Detailansicht eines Behandlungsmoduls 100 mit einer Bodenwandung 130 nach Figur 30, Figur 34 zeigt eine Detailansicht eines Behandlungsmoduls 130 mit Türsegment 50 und einer Bodenwandung 130 nach Figur 30. Figur 35 zeigt Details einer Verbindung von Elementen einer Bodenwandung 130 oder Deckenwandung 134 nach Figur 30, wobei Figur 36 Details der Verbindung nach Figur 35 zeigt.

Eine Bodenwandung 130 weist im Gegensatz zu einer Deckenwandung 134 zusätzliche, hier nicht näher bezeichnete Elemente auf, wie etwa seitliche Hebestecker sowie unterseitige Füße. Deckenwandungen 134 sind jedoch hinsichtlich der Kassetten 10, 14, 15 analog wie die Bodenwandungen 130 ausgeführt.

Die Kassetten 10, 14, 15 sind in diesem Ausführungsbeispiel innerhalb des Flächenelements 104, bzw. 108, bereichsweise mit ihren Längsseiten 68 quer zur Längserstreckung 140 und mit ihren Querseiten 66 parallel zur Längserstreckung 140 des Flächenelements 104, bzw. 108, angeordnet sind. Bereichsweise sind Kassetten 17 mit ihren Querseiten 66 quer zur Längserstreckung 140 und mit ihren Längsseiten 68 parallel zur Längserstreckung 140 des Flächenelements 104, bzw.108, angeordnet.

Die Bodenwandung 130 oder Deckenwandung 134 kann aus Kassetten 10, 14, 15, 17 so gebildet sein, dass mehrere Kassetten 10, 14, 15, hier z.B. fünf Kassetten 10, 14 und eine Kassette 15, an ihren Langseiten zu einem Verbund zusammengefügt sind. Solche Kassetten 10, 14, 15 können an den Schmalseiten der Kassetten 10, 14, 15 zusammengefügt sein und die entsprechende Bodenwandung 130 oder Deckenwandung 134 bilden. Die Kassetten 10, 14 sind von gleichen Abmessungen, während die abschließende Kassette 15 am Ende des Verbunds in diesem Beispiel eine Breite aufweist, die geringer ist als die Breite 90 der Kassetten 10, 14. Die Kassetten 10, 14, 15 weisen dieselbe Länge 94 auf.

An den Schmalseiten der Kassetten 10, 14, 15 an einer Seite des Verbunds können zwei der Kassetten 17 mit ihren Langseiten quer zu den Kassetten 10, 14, 15 des Verbunds anliegen, beispielsweise über Fügenähte 119 verbunden sein. Die quer liegenden Kassetten 17 stoßen mit ihren Schmalseiten aneinander. Damit braucht lediglich ein Verbund von Kassetten 10, 14, 15 hergestellt werden, an den zwei Kassetten 17 quer zu den Kassetten des Verbunds montiert werden. Dies reduziert vorteilhaft die Fertigungszeit von Bodenwandung 130 und Deckenwandung 134.

Die Untersicht in Figur 31 zeigt eine Konstruktion zur Verbindung der Kassetten 10, 14, 15, 17 der Bodenwandung 130.

Wie die Figur 32 zeigt, können Deckenwandung 134 und Bodenwandung 130 bei einem Behandlungsmodul 100 so montiert sein, dass die beiden querliegenden Kassetten 17 an dem Verbund von Kassetten 10, 14, 15 auf gegenüberliegenden Seiten des Behandlungsmoduls 100 angeordnet sind.

Die Verbindung zwischen den querliegenden Kassetten 17 und dem Verbund von Kassetten 10, 14, 15 befindet sich idealerweise im Bereich der Innenwandung 111 oder 110, so dass mit nur einer einzigen durchlaufenden Schweißnaht sowohl die Bodenwandung 130 oder Deckenwandung 134 als auch die Verbindung zur Innenwand dicht geschweißt werden kann.

Die Figuren 35 und 36 zeigen günstige Verbindungen für eine derartige Bodenwandung 130 nach Figur 30. Eine Querstrebe 145 liegt über den Fügenähten zwischen den Kassetten 10, 14, 15 und den zu diesen querliegenden Kassetten 17. In den Querstreben 145 ist jeweils eine Ausnehmung 146 ausgebildet, in welche die Kanten mit den Fügenähten zwischen den Kassetten 10, 14, 15 und den Kassetten 17 eingreifen kann. Für einen besseren Transport können diese Querstreben 145 in diesem Bereich geteilt sein. In diesem Fall kommt ein Verbindungsschuh 147 zum Einsatz, der U-förmig ausgebildet ist und die die geteilten Querstreben 145 verbindet.

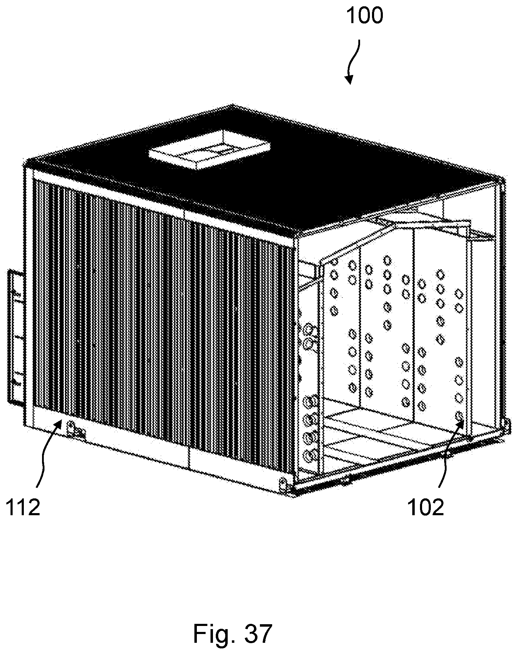

Figur 37 zeigt ein Behandlungsmodul 100 zum Kühlen nach einem Ausführungsbeispiel der Erfindung, das in vergleichbarer Weise modular aufgebaut sein kann und ein Innengehäuse 102 und ein Außengehäuse 112 aufweist. Düsenwände sind hier zum Abkühlen von erwärmten Bauteilen vorgesehen. Ein derartiges Behandlungsmodul 100 kann sich beispielsweise an einen Behandlungstunnel 200 wie in Figur 29 beschrieben, anschließen.

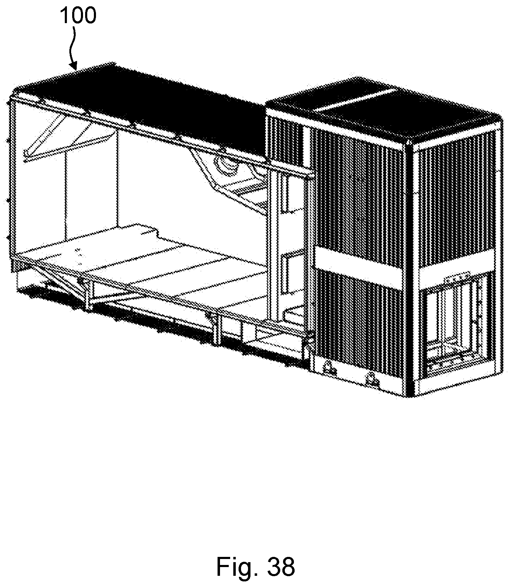

Figur 38 zeigt ein Behandlungsmodul 100 als Behandlungstunnel zur Querförderung der Fahrzeugkarossen mit angeschlossenem Heizsegment nach einem Ausführungsbeispiel der Erfindung, das in vergleichbarer Weise modular aufgebaut sein kann.

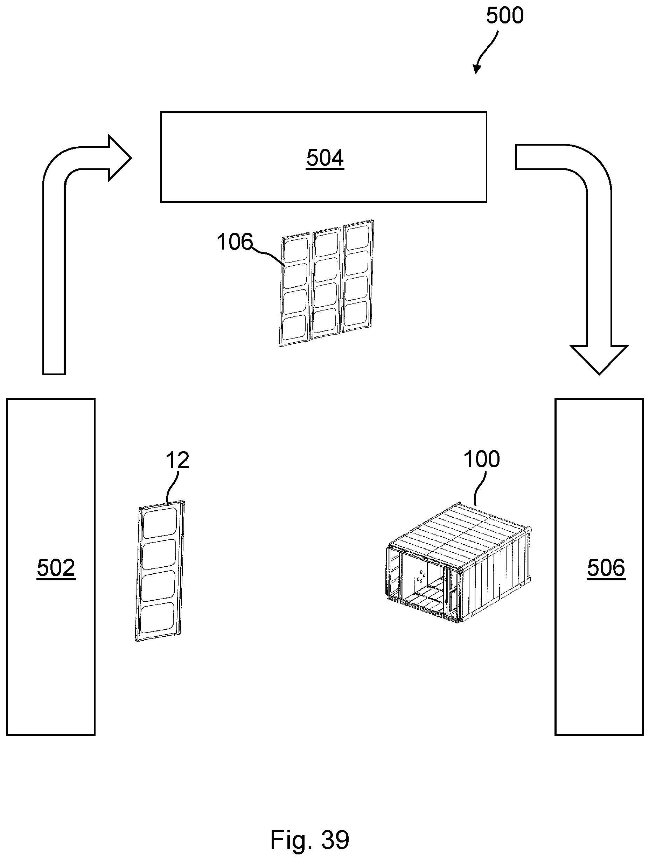

In Figur 39 ist eine Fertigungsanlage 500 für die Fertigung von Behandlungsmodulen 100 nach einem Ausführungsbeispiel der Erfindung dargestellt. Die Fertigungsanlage 500 umfasst eine erste Linie 502 zur Fertigung vorgefertigter Kassetten 10, 11, 12, 13, 14, insbesondere von Bodenwandungskassetten 10, Seitenwandungskassetten 12, Deckenwandungskassetten 14 und Innenwandungskassetten 11, 13. Weiter umfasst die Fertigungsanlage eine zweite Linie 504 zum Verbinden der vorgefertigten Kassetten 10, 11, 12, 13, 14 zu Flächenelementen 104, 105, 106, 107, 108, insbesondere zu Bodenwandungen 130, Seitenwandungen 132, Deckenwandungen 134 und Innenwandungen 110, 111, sowie eine dritte Linie 506 zum Verbinden der Flächenelemente 104, 105, 106, 107, 108 zu einem Behandlungsmodul 100. In der ersten Linie 502 sind insbesondere Fertigungsschritte mittels Trennen und Biegen implementiert. Trennen kann dabei Verfahren wie z.B. Stanzen, Schneiden, Abscheren, Laserbehandlung umfassen.

In der zweiten Linie 504 sind insbesondere Fertigungsschritte mittels Fügen, Aufbringen von Verkleidung und/oder Isolierung implementiert. In der dritten Linie 506 sind insbesondere Fertigungsschritte mittels Fügen von Flächenelementen 104, 105, 106, 107, 108, Isolieren und Verkleiden von Eckverbindungen 28 implementiert.

Vorteilhaft können in der erfindungsgemäßen Fertigungslinie 500 auf der ersten Linie 502 Kassetten 10, 11, 12, 13, 14 vollautomatisch hergestellt werden. Dies wird besonders begünstigt, da die Kassetten 10, 11, 12, 13, 14 eine gleichartige Grundstruktur jeweils für Bodenwandung 130, Seitenwandung 132, Deckenwandung 134 und Innenwandungen 110, 111 sowie entsprechende Standardschnittstellen 80, 82, 84, 86 aufweisen.

Auf der ersten Linie 502 können günstigerweise die üblichen Blechbearbeitungsschritte wie Stanzen, Schneiden, Abscheren, Biegen, Umformen zur Herstellung der Kassetten 10, 11, 12, 13, 14 erfolgen. Auf der zweiten Linie können die vorgefertigten Kassetten 10, 11, 12, 13, 14 dann zu den Flächenelementen 104, 105, 106, 107, 108 in Form von Bodenwandung 130, Seitenwandung 132, Deckenwandung 134 und Innenwandungen 110, 111 gefügt werden. Verkleidungselemente 114 und/oder Isolierungselemente 76 können angebracht werden, während auf der dritten Linie 503 dann die fertigen Flächenelemente 104, 105, 106, 107, 108 zu ganzen Behandlungsmodulen 100 zusammengefügt werden.

Transport und Montage der Kassetten 10, 11, 12, 13, 14 kann in der Fließfertigung auf Transportbahnen, beispielsweise Rollentischen, Kugeltischen, Bürstentischen erfolgen, sodass kein Kran notwendig ist, um die Teile zu bewegen. Die Prozesse sind leicht automatisierbar. Eine einfache Montage der Kassetten 10, 11, 12, 13, 14 ist möglich durch das Vorhandensein von Positionierelementen wie Bohrungen, Prägungen, Erhebungen, Vertiefungen, bzw. Anschlägen, d.h. es ist kein Messen der Bauteile nötig.

### Bezugszeichen

- 10: Kassette
- 11: Kassette
- 12: Kassette
- 13: Kassette
- 14: Kassette
- 15: Kassette schmal
- 16: Hauptfläche
- 17: Kassette quer
- 18: Versteifungsstruktur
- 20: Auflageleiste
- 22: Anpressleiste
- 24: Rahmenelement
- 26: Positionierelement
- 27: Positionierelement
- 28: Eckverbindung
- 30: Prägung
- 32: Filterrahmen
- 34: Filtereinsatz
- 36: Klammer
- 38: Klammer
- 40: Kassettenwandung
- 41: Düsenauslass
- 42: Düse
- 43: Nut/Federhalterung
- 44: Verriegelungselement
- 45: Bund
- 46: Aussparung
- 48: Lasche
- 50: Türsegment
- 51: Bedienhebel
- 52: Türscharnier
- 53: Einstellschraube
- 54: Türrahmen
- 55: Feder
- 56: Türblatt
- 57: Anpressplatte
- 58: Dichtung
- 59: Dichtung
- 60: Kompensator
- 62: Anschraubpunkt
- 64: Teleskopverbindung
- 66: Querseite
- 68: Längsseite
- 70: Abstützelement
- 72: Aussparung
- 74: Isoliermaterial
- 76: Isolierung
- 78: Verbindungselement
- 80: Standardschnittstelle
- 82: Standardschnittstelle
- 84: Standardschnittstelle
- 86: Standardschnittstelle
- 88: Niet
- 90: Kassettenbreite in Längsrichtung
- 92: Kassettenbreite in Längsrichtung
- 94: Kassettenlänge quer zur Längsrichtung
- 96: Kassettenlänge quer zur Längsrichtung
- 98: Langloch
- 100: Behandlungsmodul
- 102: Innengehäuse
- 104: Flächenelement
- 105: Flächenelement
- 106: Flächenelement
- 107: Flächenelement
- 108: Flächenelement
- 110: Innenwandung
- 111: Innenwandung
- 112: Außengehäuse
- 113: Filterbox
- 114: Außenverkleidungselement
- 115: Deckblech
- 116: Aufhängeschiene
- 117: Halter für Aufhängeschiene
- 118: Fügenaht
- 119: Fügenaht
- 120: Modul-Verbindungsschnittstelle
- 122: Schweißrahmen
- 124: Kante
- 126: Teleskopverbindung
- 128: Inneres
- 130: Bodenwandung
- 132: Seitenwandwandung
- 134: Deckenwandung
- 136: Schweißkante
- 138: Abdeckblech
- 139: Halter für Abdeckblech
- 140: Längserstreckung
- 142: Quererstreckung
- 144: Quererstreckung
- 145: Querstrebe
- 146: Halter
- 147: Verbindungsschuh
- 150: heiße Seite
- 152: kalte Seite
- 160: Anlagenfuß
- 162: Schenkel
- 164: Platte
- 166: Öffnung
- 170: Führungselement
- 172: Langloch
- 174: Einkerbung
- 200: Behandlungstunnel
- 210: Aufstellort
- 500: Fertigungsanlage
- 502: Linie
- 504: Linie
- 506: Linie

## Patentansprüche

1. Behandlungsmodul (100) für einen Behandlungstunnel (200) eines Trockners einer Lackieranlage der ein oder mehrere in einer Längsrichtung (L) aufeinander folgende Behandlungsmodule (100) aufweist, mit wenigstens einem Innengehäuse (102), das wenigstens ein Flächenelement (104, 105, 106, 107, 108) aufweist in Form einer Bodenwandung (130) und/oder einer Seitenwandung (132) und/oder einer Deckenwandung (134) und/oder einer Innenwandung (110, 111),
wobei das wenigstens eine Flächenelement (104, 105, 106, 107, 108) eine Längserstreckung (140) in der Längsrichtung (L) und eine Quererstreckung (142) quer zur Längsrichtung (L) aufweist,
wobei das wenigstens eine Flächenelement (104, 105, 106, 107, 108) aus vorgefertigten Kassetten (10, 11, 12, 13, 14), insbesondere Blechkassetten, gebildet ist, welche Querseiten (66) mit einer Kassettenbreite (90, 92) in Längsrichtung (L) und Längsseiten (68) mit einer Kassettenlänge (94) quer zur Längsrichtung (L) aufweisen, und die zu dem wenigstens einen Flächenelement (104, 105, 106, 107, 108) vormontiert und miteinander dicht verschweißt sind,
wobei das Flächenelement (104, 105, 106, 107, 108) zumindest in Längsrichtung (L) in ein Rastermaß unterteilt ist, das mit zumindest einer Kassettenbreite (90, 92) der Kassetten (10, 11, 12, 13, 14) korrespondiert,
wobei die Kassetten (10, 11, 12, 13, 14) innerhalb des Flächenelements (104, 105, 106, 107, 108) wenigstens bereichsweise mit ihren Längsseiten (68) quer zur Längserstreckung (140) und mit ihren Querseiten (66) parallel zur Längserstreckung (140) des Flächenelements (104, 105, 106, 107, 108) angeordnet sind,
und/oder wobei die Kassetten (10, 11, 12, 13, 14) innerhalb des Flächenelements (104, 105, 106, 107, 108) wenigstens bereichsweise mit ihren Querseiten (66) quer zur Längserstreckung (140) und mit ihren Längsseiten (68) parallel zur Längserstreckung (140) des Flächenelements (104, 105, 106, 107, 108) angeordnet sind,
wobei fertige Flächenelemente (104, 105, 106, 107, 108) zu einem Behandlungsmodul (100) zusammengefügt sind.

2. Behandlungsmodul nach Anspruch 1, wobei jede Kassette (10, 11, 12, 13, 14) eine oder mehrere Standardschnittstellen (80, 82, 84, 86) für eine Verbindung mit einer benachbarten Kassette (10, 11, 12, 13, 14) zumindest im gleichen und/oder benachbarten Flächenelement (104, 105, 106, 107, 108) aufweist.

3. Behandlungsmodul nach Anspruch 1 oder 2, wobei eine Standardschnittstelle (80, 82, 84, 86) für eine Verbindung einer Kassette (10, 11, 12, 13, 14) zu einer benachbarten Kassette (10, 11, 12, 13, 14) im gleichen oder in einem benachbarten Flächenelement (104, 105, 106, 107, 108) wenigstens ein Rahmenelement (24) mit wenigstens einem Positionierelement (26) aufweist, insbesondere wobei das wenigstens eine Rahmenelement (24) als abstehende Lasche, insbesondere als abgewinkelte Lasche, insbesondere als Umkantung, ausgebildet ist.

4. Behandlungsmodul nach einem der vorhergehenden Ansprüche, wobei eine Standardschnittstelle (80, 82, 84, 86) für eine Verbindung einer Kassette (10, 11, 12, 13, 14) zu einer benachbarten Kassette (10, 11, 12, 13, 14) in verschiedenen aneinander angrenzenden Flächenelementen (104, 105, 106, 107, 108) wenigstens ein Rahmenelement (24) mit wenigstens einem Positionierelement (26) und/oder wenigstens einer Prägung (30), insbesondere wenigstens einer Prägung (30) in einer Hauptfläche (16) der Kassette (10, 11, 12, 13, 14) aufweist, insbesondere wobei die wenigstens eine Prägung (30) zum Positionieren von wenigstens einer Innenwandung (110, 111) des Innengehäuses (102) vorgesehen ist.

5. Behandlungsmodul nach Anspruch 4, wobei eine Standardschnittstelle (82) zwischen einer Seitenwandung (132) und einer Bodenwandung (130) eine Auflageleiste (20) aufweist, die insbesondere zur Abstützung der Seitenwandung (132) ausgebildet ist.

6. Behandlungsmodul nach Anspruch 4 oder 5, wobei eine Standardschnittstelle (84) zwischen einer Seitenwandung (132) und einer Bodenwandung (130) eine Anpressleiste (22) aufweist.

7. Behandlungsmodul nach einem der vorhergehenden Ansprüche, wobei Standardschnittstellen (80, 82, 84, 86) zur Verbindung von Kassetten (10, 11, 12, 13, 14) und/oder Flächenelementen (104, 105, 106, 107, 108) verwechslungssicher nach dem Poka-Yoke-Prinzip ausgebildet sind.

8. Behandlungsmodul nach einem der vorhergehenden Ansprüche, wobei die vorgefertigten Kassetten (10, 11, 12, 13, 14) in ihrer Hauptfläche (16) eingeprägte Versteifungsstrukturen (18) aufweisen.

9. Behandlungsmodul nach einem der vorhergehenden Ansprüche, wobei geschlossene und/oder verriegelte Eckverbindungen (28) zur Verbindung und/oder Versteifung von abgewinkelten Rahmenelementen (24) der Kassetten (10, 11, 12, 13, 14) vorgesehen sind.

10. Behandlungsmodul nach einem der vorhergehenden Ansprüche, wobei die Flächenelemente (104, 105, 106, 107, 108) mittels ineinandergreifenden Profilierungen der Kassetten (10, 11, 12, 13, 14) zueinander positioniert sind.

11. Behandlungsmodul nach einem der vorhergehenden Ansprüche, wobei das Innengehäuse (102) von einem thermisch entkoppelten Außengehäuse (112) umgeben ist, insbesondere wobei das Innengehäuse (102) bei thermisch bedingter Längenänderung entlang der Längsrichtung (L) unabhängig bewegbar ist.

12. Behandlungsmodul nach Anspruch 11, wobei am Innengehäuse (102) thermisch entkoppelte Halterungen (116), insbesondere Aufhängeschienen (116) für Außenverkleidungselemente (114) angeordnet sind.

13. Behandlungsmodul nach Anspruch 11 oder 12, wobei das Außengehäuse (112) zumindest bereichsweise ein oder mehrere Außenverkleidungselemente (114) in Form von Profilblechen aufweist.

14. Behandlungsmodul nach einem der vorhergehenden Ansprüche, wobei eine Innenwandung (110) zur Aufnahme von einem oder mehreren Filterrahmen (32) vorgesehen ist, insbesondere wobei Filtereinsätze (34) mittels Klammern (36, 38) in den Filterrahmen (32) fixiert oder fixierbar sind.

15. Behandlungsmodul nach einem der vorhergehenden Ansprüche, wobei eine Innenwandung (111) zur Aufnahme von einer oder mehreren Düsen (42) vorgesehen ist, insbesondere wobei eine Schnittstelle (43) zwischen einer Innenwandung (111) und einer Düse (42) eine Nut/Federhalterung (43) aufweist.

16. Behandlungsmodul nach einem der vorhergehenden Ansprüche, wobei wenigstens ein thermisch entkoppeltes Türsegment (50) in einem seitlichen Flächenelement (106) vorgesehen ist, wobei wenigstens ein Türscharnier (52) des Türsegments (50) eine einstellbare Federkraft aufweist.

17. Behandlungsmodul nach einem der vorhergehenden Ansprüche, wobei eine integrierte Andockgeometrie, insbesondere ein in ein Flächenelement (104, 105, 106, 107, 108) integrierter Schweißrahmen (122), zur Montage von Behandlungsmodul (100) an Behandlungsmodul (100) vorgesehen ist.

18. Behandlungstunnel (200), der ein oder mehrere aufeinander folgende Behandlungsmodule (100) nach einem der vorhergehenden Ansprüche, aufweist, wobei eine integrierte Andockgeometrie, insbesondere ein in ein Flächenelement (104, 105, 106, 107, 108) integrierter Schweißrahmen (122) zur Montage von Behandlungsmodul (100) an Behandlungsmodul (100) vorgesehen ist.

19. Behandlungstunnel nach Anspruch 18, wobei ein thermischer Kompensator (60) für eine flexible Verbindung Behandlungsmodul (100) mit Behandlungsmodul (100) vorgesehen ist.

20. Behandlungstunnel nach Anspruch 18 oder 19, wobei eine Teleskopverbindung (64) zur Verbindung wenigstens zweier Außenverkleidungselemente (114) vorgesehen ist.

21. Fertigungsanlage (500) für ein Behandlungsmodul (100) nach einem der Ansprüche 1 bis 17, umfassend wenigstens
- eine erste Linie (502) zur Fertigung vorgefertigter Kassetten (10, 11, 12, 13, 14), insbesondere Blechkassetten, insbesondere von Bodenwandungskassetten (10), Seitenwandungskassetten (12), Deckenwandungskassetten (14), Innenwandungskassetten (11, 13),
- eine zweite Linie (504) zum Verbinden der vorgefertigten Kassetten (10, 11, 12, 13, 14) zu Flächenelementen (104, 105, 106, 107, 108), insbesondere zu Bodenwandung (130), Seitenwandung (132), Deckenwandung (134), Innenwandung (110, 111),
- eine dritte Linie (506) zum Verbinden der Flächenelemente (104, 105, 106, 107, 108) zu einem Behandlungsmodul (100).

22. Fertigungsanlage nach Anspruch 21, wobei in der ersten Linie (502) insbesondere Fertigungsschritte mittels Trennen und Biegen, insbesondere Stanzen, Schneiden, Abscheren, Laserbehandlung implementiert sind, und/oder
wobei in der zweiten Linie (504) insbesondere Fertigungsschritte mittels Fügen, Aufbringen von Verkleidung und/oder Isolierung implementiert sind, und/oder
wobei in der dritten Linie (506) insbesondere Fertigungsschritte mittels Fügen von Flächenelementen, Isolieren und Verkleiden von Eckverbindungen implementiert sind.

## Claims

1. Treatment module (100) for a treatment tunnel (200) of a dryer of a paint shop, which treatment tunnel has one or more treatment modules (100) following one another in a longitudinal direction (L), comprising at least one inner housing (102) which has at least one surface element (104, 105, 106, 107, 108) in the form of a bottom wall (130) and/or a side wall (132) and/or a top wall (134) and/or an inner wall (110, 111),
wherein the at least one surface element (104, 105, 106, 107, 108) has a longitudinal extent (140) in the longitudinal direction (L) and a transverse extent (142) transversely to the longitudinal direction (L),
wherein the at least one surface element (104, 105, 106, 107, 108) is formed from prefabricated cassettes (10, 11, 12, 13, 14), in particular sheet metal cassettes, which have transverse sides (66) with a cassette width (90, 92) in the longitudinal direction (L) and longitudinal sides (68) with a cassette length (94) transversely to the longitudinal direction (L) and which are preassembled to form the at least one surface element (104, 105, 106, 107, 108) and are sealingly welded to one another, wherein the surface element (104, 105, 106, 107, 108) is divided at least in the longitudinal direction (L) into a grid spacing corresponding to at least one cassette width (90, 92) of the cassettes (10, 11, 12, 13, 14), wherein the cassettes (10, 11, 12, 13, 14) are arranged within the surface element (104, 105, 106, 107, 108) with their longitudinal sides (68) transversely to the longitudinal extent (140) and with their transverse sides (66) parallel to the longitudinal extent (140) of the surface element (104, 105, 106, 107, 108) at least in some regions,
and/or wherein the cassettes (10, 11, 12, 13, 14) are arranged within the surface element (104, 105, 106, 107, 108) with their transverse sides (66) transversely to the longitudinal extent (140) and with their longitudinal sides (68) parallel to the longitudinal extent (140) of the surface element (104, 105, 106, 107, 108) at least in some regions,
wherein finished surface elements (104, 105, 106, 107, 108) are joined together to form a treatment module (100).

2. Treatment module according to Claim 1, wherein each cassette (10, 11, 12, 13, 14) has one or more standard interfaces (80, 82, 84, 86) for a connection to an adjacent cassette (10, 11, 12, 13, 14) at least in the same and/or adjacent surface element (104, 105, 106, 107, 108).

3. Treatment module according to Claim 1 or 2, wherein a standard interface (80, 82, 84, 86) has at least one frame element (24) with at least one positioning element (26) for a connection of a cassette (10, 11, 12, 13, 14) to an adjacent cassette (10, 11, 12, 13, 14) in the same or in an adjacent surface element (104, 105, 106, 107, 108), in particular wherein the at least one frame element (24) is configured as a protruding tab, in particular as an angled-back tab, in particular as a folded-over edge.

4. Treatment module according to one of the preceding claims, wherein a standard interface (80, 82, 84, 86) has at least one frame element (24) with at least one positioning element (26) and/or at least one embossed portion (30), in particular at least one embossed portion (30) in a main surface (16) of the cassette (10, 11, 12, 13, 14), for a connection of a cassette (10, 11, 12, 13, 14) to an adjacent cassette (10, 11, 12, 13, 14) in different adjoining surface elements (104, 105, 106, 107, 108), in particular wherein the at least one embossed portion (30) is provided for positioning at least one inner wall (110, 111) of the inner housing (102).

5. Treatment module according to Claim 4, wherein a standard interface (82) between a side wall (132) and a bottom wall (130) has a support strip (20) which is configured, in particular, for supporting the side wall (132).

6. Treatment module according to Claim 4 or 5, wherein a standard interface (84) between a side wall (132) and a bottom wall (130) has a pressure strip (22).

7. Treatment module according to one of the preceding claims, wherein standard interfaces (80, 82, 84, 86) for connecting cassettes (10, 11, 12, 13, 14) and/or surface elements (104, 105, 106, 107, 108) are configured according to the poka-yoke principle so as to avoid confusion.

8. Treatment module according to one of the preceding claims, wherein the prefabricated cassettes (10, 11, 12, 13, 14) have embossed stiffening structures (18) in their main surface (16).

9. Treatment module according to one of the preceding claims, wherein closed and/or locked corner connections (28) are provided for connecting and/or stiffening angled-back frame elements (24) of the cassettes (10, 11, 12, 13, 14).

10. Treatment module according to one of the preceding claims, wherein the surface elements (104, 105, 106, 107, 108) are positioned relative to one another by means of interlocking profiles of the cassettes (10, 11, 12, 13, 14).

11. Treatment module according to one of the preceding claims, wherein the inner housing (102) is surrounded by a thermally decoupled outer housing (112), in particular wherein the inner housing (102) is movable independently in the longitudinal direction (L) in the case of a thermally induced length change.

12. Treatment module according to Claim 11, wherein thermally decoupled holders (116), in particular suspension rails (116) for outer cladding elements (114), are arranged on the inner housing (102).

13. Treatment module according to Claim 11 or 12, wherein the outer housing (112) has one or more outer cladding elements (114) in the form of profiled metal sheets at least in some regions.

14. Treatment module according to one of the preceding claims, wherein an inner wall (110) is provided for receiving one or more filter frames (32), in particular wherein filter inserts (34) are fixed or fixable by means of clamps (36, 38) in the filter frame (32).

15. Treatment module according to one of the preceding claims, wherein an inner wall (111) is provided for receiving one or more nozzles (42), in particular wherein an interface (43) between an inner wall (111) and a nozzle (42) has a tongue/groove holder (43).

16. Treatment module according to one of the preceding claims, wherein at least one thermally decoupled door segment (50) is provided in a lateral surface element (106), wherein at least one door hinge (52) of the door segment (50) has an adjustable spring force.

17. Treatment module according to one of the preceding claims, wherein an integrated docking geometry, in particular a welding frame (122) integrated in a surface element (104, 105, 106, 107, 108), is provided for the assembly of treatment module (100) to treatment module (100).

18. Treatment tunnel (200) which has one or more treatment modules (100) according to one of the preceding claims that follow one another, wherein an integrated docking geometry, in particular a welding frame (122) integrated in a surface element (104, 105, 106, 107, 108), is provided for the assembly of treatment module (100) to treatment module (100).

19. Treatment tunnel according to Claim 18, wherein a thermal compensator (60) is provided for a flexible connection of treatment module (100) to treatment module (100).

20. Treatment tunnel according to Claim 18 or 19, wherein a telescopic connection (64) is provided for connecting at least two outer cladding elements (114).

21. Production system (500) for a treatment module (100) according to one of Claims 1 to 17, comprising at least
- a first line (502) for producing prefabricated cassettes (10, 11, 12, 13, 14), in particular sheet metal cassettes, in particular bottom wall cassettes (10), side wall cassettes (12), top wall cassettes (14), inner wall cassettes (11, 13),
- a second line (504) for connecting the prefabricated cassettes (10, 11, 12, 13, 14) to form surface elements (104, 105, 106, 107, 108), in particular to form the bottom wall (130), side wall (132), top wall (134), inner wall (110, 111),
- a third line (506) for connecting the surface elements (104, 105, 106, 107, 108) to form a treatment module (100).

22. Production system according to Claim 21, wherein in the first line (502), in particular, production steps are implemented by means of separating and bending, in particular stamping, cutting, shearing, laser treatment, and/or
wherein in the second line (504), in particular, production steps are implemented by means of joining, applying cladding and/or insulation, and/or
wherein in the third line (506), in particular, production steps are implemented by means of joining surface elements, insulating and cladding corner connections.

## Revendications

1. Module de traitement (100) pour un tunnel de traitement (200) d'un séchoir d'une installation de peinture qui présente un ou plusieurs modules de traitement (100) successifs dans une direction longitudinale (L), avec au moins un boîtier intérieur (102) qui présente au moins un élément de surface (104, 105, 106, 107, 108) sous la forme d'une paroi de fond (130) et/ou d'une paroi latérale (132) et/ou d'une paroi de plafond (134) et/ou d'une paroi intérieure (110, 111), dans lequel l'au moins un élément de surface (104, 105, 106, 107, 108) présente une extension longitudinale (140) dans la direction longitudinale (L) et une extension transversale (142) transversalement à la direction longitudinale (L),
dans lequel l'au moins un élément de surface (104, 105, 106, 107, 108) est formé de cassettes préfabriquées (10, 11, 12, 13, 14), notamment de cassettes en tôle, qui présentent des côtés transversaux (66) avec une largeur de cassette (90, 92) dans la direction longitudinale (L) et des côtés longitudinaux (68) avec une longueur de cassette (94) transversalement à la direction longitudinale (L), et qui sont prémontées en l'au moins un élément de surface (104, 105, 106, 107, 108) et soudées de manière étanche les unes aux autres,
dans lequel l'élément de surface (104, 105, 106, 107, 108) est divisé, au moins dans la direction longitudinale (L), en une dimension de trame qui correspond à au moins une largeur de cassette (90, 92) des cassettes (10, 11, 12, 13, 14),
dans lequel les cassettes (10, 11, 12, 13, 14) sont agencées à l'intérieur de l'élément de surface (104, 105, 106, 107, 108) au moins par zones avec leurs côtés longitudinaux (68) transversalement à l'extension longitudinale (140) et avec leurs côtés transversaux (66) parallèlement à l'extension longitudinale (140) de l'élément de surface (104, 105, 106, 107, 108),
et/ou dans lequel les cassettes (10, 11, 12, 13, 14) sont agencées à l'intérieur de l'élément de surface (104, 105, 106, 107, 108) au moins par zones avec leurs côtés transversaux (66) transversalement à l'extension longitudinale (140) et avec leurs côtés longitudinaux (68) parallèlement à l'extension longitudinale (140) de l'élément de surface (104, 105, 106, 107, 108),
dans lequel des éléments de surface finis (104, 105, 106, 107, 108) sont assemblés en un module de traitement (100).

2. Module de traitement selon la revendication 1, dans lequel chaque cassette (10, 11, 12, 13, 14) présente une ou plusieurs interfaces standard (80, 82, 84, 86) pour une liaison à une cassette voisine (10, 11, 12, 13, 14) au moins dans le même élément de surface et/ou dans un élément de surface voisin (104, 105, 106, 107, 108).

3. Module de traitement selon la revendication 1 ou 2, dans lequel une interface standard (80, 82, 84, 86) pour une liaison d'une cassette (10, 11, 12, 13, 14) à une cassette voisine (10, 11, 12, 13, 14) dans le même élément de surface ou dans un élément de surface voisin (104, 105, 106, 107, 108) présente au moins un élément de cadre (24) avec au moins un élément de positionnement (26), notamment dans lequel l'au moins un élément de cadre (24) est réalisé sous forme de patte en saillie, notamment sous forme de patte coudée, notamment sous forme de repli.

4. Module de traitement selon l'une quelconque des revendications précédentes, dans lequel une interface standard (80, 82, 84, 86) pour une liaison d'une cassette (10, 11, 12, 13, 14) à une cassette voisine (10, 11, 12, 13, 14) dans différents éléments de surface adjacents (104, 105, 106, 107, 108) présente au moins un élément de cadre (24) avec au moins un élément de positionnement (26) et/ou au moins une empreinte (30), notamment au moins une empreinte (30) dans une surface principale (16) de la cassette (10, 11, 12, 13, 14), notamment dans lequel l'au moins une empreinte (30) est prévue pour le positionnement d'au moins une paroi intérieure (110, 111) du boîtier intérieur (102).

5. Module de traitement selon la revendication 4, dans lequel une interface standard (82) entre une paroi latérale (132) et une paroi de fond (130) présente une barre d'appui (20) qui est réalisée notamment pour soutenir la paroi latérale (132).

6. Module de traitement selon la revendication 4 ou 5, dans lequel une interface standard (84) entre une paroi latérale (132) et une paroi de fond (130) présente une barre de pression (22).

7. Module de traitement selon l'une quelconque des revendications précédentes, dans lequel des interfaces standard (80, 82, 84, 86) pour la liaison de cassettes (10, 11, 12, 13, 14) et/ou d'éléments de surface (104, 105, 106, 107, 108) sont réalisées sans risque de confusion selon le principe Poka-Yoke.

8. Module de traitement selon l'une quelconque des revendications précédentes, dans lequel les cassettes préfabriquées (10, 11, 12, 13, 14) présentent des structures de rigidification (18) imprimées dans leur surface principale (16).

9. Module de traitement selon l'une quelconque des revendications précédentes, dans lequel des liaisons d'angle (28) fermées et/ou verrouillées sont prévues pour relier et/ou rigidifier des éléments de cadre (24) coudés des cassettes (10, 11, 12, 13, 14).

10. Module de traitement selon l'une quelconque des revendications précédentes, dans lequel les éléments de surface (104, 105, 106, 107, 108) sont positionnés les uns par rapport aux autres au moyen de profilages imbriqués des cassettes (10, 11, 12, 13, 14).

11. Module de traitement selon l'une quelconque des revendications précédentes, dans lequel le boîtier intérieur (102) est entouré par un boîtier extérieur (112) découplé thermiquement, notamment dans lequel le boîtier intérieur (102) est mobile indépendamment le long de la direction longitudinale (L) en cas de variation de longueur due à la chaleur.

12. Module de traitement selon la revendication 11, dans lequel des supports (116) découplés thermiquement, notamment des rails de suspension (116) pour des éléments d'habillage extérieurs (114), sont agencés sur le boîtier intérieur (102).

13. Module de traitement selon la revendication 11 ou 12, dans lequel le boîtier extérieur (112) présente au moins par zones un ou plusieurs éléments d'habillage extérieur (114) sous forme de tôles profilées.

14. Module de traitement selon l'une quelconque des revendications précédentes, dans lequel une paroi intérieure (110) est prévue pour recevoir un ou plusieurs cadres de filtre (32), notamment dans lequel des inserts de filtre (34) sont fixés ou peuvent être fixés dans les cadres de filtre (32) au moyen d'attaches (36, 38).

15. Module de traitement selon l'une quelconque des revendications précédentes, dans lequel une paroi intérieure (111) est prévue pour recevoir une ou plusieurs buses (42), notamment dans lequel une interface (43) entre une paroi intérieure (111) et une buse (42) comprend un support à rainure/languette (43).

16. Module de traitement selon l'une quelconque des revendications précédentes, dans lequel au moins un segment de porte (50) thermiquement découplé est prévu dans un élément de surface latéral (106), dans lequel au moins une charnière de porte (52) du segment de porte (50) présente une force de ressort réglable.

17. Module de traitement selon l'une quelconque des revendications précédentes, dans lequel il est prévu une géométrie d'amarrage intégrée, notamment un cadre de soudage (122) intégré dans un élément de surface (104, 105, 106, 107, 108), pour le montage d'un module de traitement (100) sur un module de traitement (100).

18. Tunnel de traitement (200), qui présente un ou plusieurs modules de traitement (100) successifs selon l'une quelconque des revendications précédentes, dans lequel il est prévu une géométrie d'amarrage intégrée, notamment un cadre de soudage (122) intégré dans un élément de surface (104, 105, 106, 107, 108) pour le montage d'un module de traitement (100) sur un module de traitement (100).

19. Tunnel de traitement selon la revendication 18, dans lequel un compensateur thermique (60) est prévu pour une liaison flexible d'un module de traitement (100) à un module de traitement (100).

20. Tunnel de traitement selon la revendication 18 ou 19, dans lequel une liaison télescopique (64) est prévue pour relier au moins deux éléments d'habillage extérieur (114) .

21. Installation de fabrication (500) pour un module de traitement (100) selon l'une quelconque des revendications 1 à 17, comprenant au moins
- une première ligne (502) pour la fabrication de cassettes préfabriquées (10, 11, 12, 13, 14), notamment de cassettes en tôle, notamment de cassettes de paroi de fond (10), de cassettes de paroi latérale (12), de cassettes de paroi de plafond (14), de cassettes de paroi intérieure (11, 13),
- une deuxième ligne (504) pour relier les cassettes préfabriquées (10, 11, 12, 13, 14) en éléments de surface (104, 105, 106, 107, 108), notamment en paroi de fond (130), paroi latérale (132), paroi de plafond (134), paroi intérieure (110, 111),
- une troisième ligne (506) pour relier les éléments de surface (104, 105, 106, 107, 108) en un module de traitement (100).

22. Installation de fabrication selon la revendication 21, dans laquelle sont notamment mises en œuvre dans la première ligne (502) des étapes de fabrication au moyen de séparation et de pliage, notamment d'estampage, de découpage, de cisaillage, de traitement au laser, et/ou dans laquelle sont notamment mises en œuvre dans la deuxième ligne (504) des étapes de fabrication au moyen d'assemblage, d'application d'habillage et/ou d'isolation, et/ou
dans laquelle sont notamment mises en œuvre dans la troisième ligne (506) des étapes de fabrication au moyen d'assemblage d'éléments de surface, d'isolation et d'habillage de liaisons d'angle.
